# EUROPÄISCHE PATENTSCHRIFT

(11) **EP 0 856 019 B1**
(45) Veröffentlichungstag und Bekanntmachung des Hinweises auf die Patenterteilung: **22.09.1999**
(21) Anmeldenummer: 96934685.7
(22) Anmeldetag: 17.10.1996
(51) Int. Cl.: C08G 18/62, C08G 18/40

(54) **AUS MINDESTENS 3 KOMPONENTEN BESTEHENDES BESCHICHTUNGSMITTEL, VERFAHREN ZU SEINER HERSTELLUNG SOWIE SEINE VERWENDUNG**
COATING AGENT COMPRISING AT LEAST THREE COMPONENTS, PROCESS FOR ITS PREPARATION AND ITS USE
AGENT DE RECOUVREMENT COMPOSE D'AU MOINS 3 CONSTITUANTS, PROCEDE PERMETTANT DE LE PREPARER ET UTILISATION

(30) Priorität: 19.10.1995 DE 19538956; 15.11.1995 DE 19542626
(43) Veröffentlichungstag der Anmeldung: 05.08.1998
(73) Patentinhaber: BASF Coatings Aktiengesellschaft, 48165 Münster (DE)
(72) Erfinder: MAYER, Bernd, D-48165 Münster (DE); NIENHAUS, Egbert, D-59387 Ascheberg (DE); RINK, Heinz-Peter, D-48153 Münster (DE); MEISENBURG, Uwe, D-47259 Duisburg (DE)
(74) Vertreter: Fitzner, Uwe, Dr.
(86) Internationale Anmeldenummer: EP9604473
(87) Internationale Veröffentlichungsnummer: WO9714731

(56) Entgegenhaltungen:
- EP-A- 0 089 497
- WO-A-92/22612
- WO-A-93/09157
- WO-A-95/00570
- DE-A- 4 421 823

## Beschreibung

### Gebiet der Erfindung

Gegenstand der vorliegenden Erfindung ist ein aus mindestens drei Komponenten (I), (II) und (III) bestehendes Beschichtungsmittel auf der Basis eines in einem oder mehreren organischen, gegebenenfalls wasserverdünnbaren Lösemitteln gelösten oder dispergierten, hydroxyl- und säuregruppenhaltigen Polymers, eines oder mehrerer isocyanatgruppenhaltigen Vernetzungsmittel und einer oder mehrerer Dispersionen von hydroxyl- und säuregruppenhaltigen Polymeren.

Die vorliegende Erfindung betrifft außerdem ein Verfahren zur Herstellung dieser Beschichtungsmittel sowie die Verwendung der Beschichtungsmittel in der Reparaturlackierung sowie für die Beschichtung von Kunststoffen sowie als Decklack oder Füller.

### Stand der Technik

Im Bereich der Autoreparaturlackierung eingesetzte konventionelle, d.h. organisch gelöste, Beschichtungsmittel auf der Basis hydroxylgruppenhaltiger Bindemittel und isocyanatgruppenhaltiger Vernetzungsmittel stellen üblicherweise Mehrkomponentensysteme dar. Die eine Komponente enthält das Bindemittel, gegebenenfalls Pigmente und Füllstoffe sowie übliche Hilfs- und Zusatzstoffe, die andere Komponente enthält das Vernetzungsmittel. Ferner wird noch ein im wesentlichen aus einer Mischung verschiedener Lösemittel bestehender Einstellzusatz zur Einstellung der gewünschten Viskosität des Beschichtungsmittels bereitgestellt.
Die Lackindustrie ist aber aus ökologischen und ökonomischen Gründen bestrebt, einen möglichst großen Teil der in Lacken eingesetzten organischen Lösemittel durch Wasser zu ersetzen. Insbesondere bei der Automobillackierung besteht ein großer Bedarf an wäßrigen Lakken. Dies gilt sowohl für den Bereich der Automobilserienlackierung als auch für den Bereich der Autoreparaturlackierung.

Wäßrige Beschichtungsmittel kommen dabei insbesondere im Bereich der Decklacke zum Einsatz. Unter Decklacken werden hierbei Lacke verstanden, die zur Herstellung der obersten Lackschicht verwendet werden. Die oberste Lackschicht kann dabei einschichtig oder mehrschichtig, insbesondere zweischichtig sein. Für einschichtige Decklacke, insbesondere für Uni-Lackierungen, werden heute überwiegend Bindemittel auf Basis hydroxylgruppenhaltiger Polyacrylate gemeinsam mit Pigmenten verwendet, die mit Di- und/oder Polyisocyanaten vernetzt werden. Zweischichtige Decklackierungen bestehen aus einer pigmentierten Basislackschicht und einer auf der Basislackschicht aufgebrachten unpigmentierten oder nur mit transparenten Pigmenten pigmentierten Klarlackschicht, die wiederum überwiegend Bindemittel auf Basis hydroxylgruppenhaltiger Polyacrylate enthält und die mit Di- und/oder Polyisocyanaten vernetzt wird.

Zweischichtlackierungen werden heute nach dem Naß-in-Naß-Verfahren hergestellt, bei dem ein pigmentierter Basislack vorlackiert wird und die so erhaltene Basislackschicht ohne Einbrennschritt aber mit Vortrocknen mit einem Klarlack überlackiert und anschließend Basislackschicht und Klarlackschicht zusammen gehärtet werden. Dieses Verfahren stellt hohe Anforderungen an den Basislack und den Klarlack. Der auf den Basislack applizierte Klarlack darf die Basislackschicht nicht anlösen, da sonst Lackierungen mit schlechtem Aussehen erhalten werden. Dieses Verfahren findet insbesondere Anwendung für Lackierungen, bei denen Basislacke, die Effektpigmente (z.B. Metallpigmente, insbesondere Aluminiumflakes oder Perlglanzpigmente) enthalten, eingesetzt werden. Durch die Klarlackschicht wird ein gutes Aussehen (guter Verlauf, hoher Glanz, geringe Kocherneigung, guter Decklackstand und hohe Härte) sowie eine gute Witterungsbeständigkeit erzielt.

Im Bereich der Autoreparaturlackierung besteht außerdem noch die Forderung, daß die eingesetzten Beschichtungsmittel bei niedrigen Temperaturen (im allgemeinen < 80 Grad C) aushärtbar sind und auch bei Aushärtung bei diesen niedrigen Temperaturen zu Filmen mit den geforderten guten mechanischen Eigenschaften führen.

Aus der EP-B-358 979 sind wäßrige Zweikomponenten-Polyurethanbeschichtungsmittel bekannt, die ein in Wasser dispergiertes, hydroxylgruppenhaltiges Polyacrylatharz sowie eine Polyisocyanatkomponente enthalten. Diese in der EP-B-358 979 beschriebenen Lacke zeigen allerdings hinsichtlich Glanz, Ausspannung (geringe Narbe der Beschichtung), Kocherneigung und dadurch bedingter Spritzsicherheit sowie hinsichtlich der Witterungsbeständigkeit, insbesondere hinsichtlich der Beständigkeit im Schwitzwasserkonstantklima (40 Grad C, 240 Stunden), Verarbeitbarkeit (Viskositätsabfall und zu kurze Topfzeit) und Härte große Nachteile.

Weiterhin ist aus der DE-AS 25 07 884 ein Verfahren zur Herstellung von wäßrigen Beschichtungsmitteln bekannt, bei dem zunächst eine Lösung eines carboxylgruppenhaltigen Polyacrylats und/oder Polyesters in einem organischen Lösemittel hergestellt wird, gegebenfalls Vernetzungsmittel sowie Pigmente und Füllstoffe in der organischen Lösung dispergiert werden und die resultierende Dispersion nach Neutralisation der Carboxylgruppen des Bindemittels in Wasser dispergiert wird.

Nachteilig bei diesem Verfahren ist, daß das organische Lösemittel nach Herstellung der wäßrigen Dispersionen durch eine azeotrope Destillation entfernt werden muß. Dieser zusätzliche Verfahrensschritt hat zusätzliche Kosten zur Folge. Ferner ist diese destillative Entfernung des Lösemittels nur beim Hersteller der Beschichtungsmittel, nicht aber beim Kunden möglich. Es müssen daher die fertigen, wäßrigen Lacke transportiert und gelagert werden, was insbesondere im Bereich der Autoreparaturlackierung häufig zu Problemen führt, da dort sehr lange Lagerstabilitäten von mindestens 24 Monaten gefordert werden.

Als Vernetzungsmittel werden zur Herstellung der in der DE-AS 25 07 884 beschriebenen Beschichtungsmittel blokkierte Polyisocyanate, Epoxidharze und/oder Aminoplastharze eingesetzt. Diese dort beschriebenen Beschichtungsmittel härten daher erst bei erhöhten Temperaturen zwischen 100 und 300 Grad C aus und sind deshalb nicht für den Bereich der Reparaturlackierung geeignet.

Schließlich sind aus der EP-A-368 499 wäßrige Beschichtungsmittel bekannt, die als hydroxylgruppenhaltige Bindemittel Polyether oder ethergruppenhaltige Polyester und als Vernetzungsmittel Amin-/Formaldehydharze enthalten. Diese Beschichtungsmittel werden dadurch hergestellt, daß das Bindemittel und das Vernetzungsmittel zunächst in einem organischen Lösemittel hergestellt werden. Diese Mischung wird kurz vor der Applikation des Beschichtungsmittels mit einem Härtungskatalysator versetzt und mit Wasser auf die gewünschte Viskosität eingestellt.
Diese aus der EP-A-368 499 bekannten wäßrigen Beschichtungsmittel weisen aber den Nachteil einer völlig unzureichenden Verträglichkeit der einzelnen Komponenten des Beschichtungsmittels auf. Sie eignen sich daher nicht zur Herstellung von Klarlacken. Darüber hinaus härten diese Beschichtungsmittel nur bei erhöhten Temperaturen und sind daher nicht für den Bereich der Reparaturlackierung geeignet. Nachteilig ist schließlich auch die unzureichende Witterungsstabilität der resultierenden Beschichtungen.

Die Aufgabe, ein wäßriges Beschichtungsmittel zur Verfügung zu stellen, das gegenüber den aus der EP-B-358 979 bekannten wäßrigen Zweikomponenten-Polyurethan-Beschichtungsmitteln verbesserte Eigenschaften aufweist und/oder verbesserte Lackfilme liefert, wird durch die noch nicht veröffentlichte deutsche Patentanmeldung P 44 21 823.0 weitgehend gelöst.
In P 44 21 823.0 werden aus mindestens drei Komponenten bestehende Beschichtungsmittel beschrieben, die dadurch gekennzeichnet sind, daß die Komponente (I) als Bindemittel mindestens ein in organischem Lösemittel gelöstes oder dispergiertes Acrylatcopolymerisat mit einem zahlenmittleren Molekulargewicht Mn zwischen 1.000 und 30.000 Dalton, einer OH-Zahl von 40 bis 200 und einer Säurezahl von 5 bis 150 und/oder ein Polyurethanharz mit einem zahlenmittleren Molekulargewicht Mn zwischen 1.000 und 30.000 Dalton, einer OH-Zahl von 20 bis 200 und einer Säurezahl von 5 bis 150 und gegebenenfalls ein weiteres Bindemittel enthält, wobei die Bindemittelkomponenten so ausgewählt werden, daß eine 50 %ige Lösung des Bindemittels in Ethoxyethylpropionat eine Viskosität von höchstens 2,5 dPas bei 23 Grad C aufweist,
daß die Komponente (II) mindestens ein nichtblockiertes Polyisocyanat als Vernetzungsmittel enthält und daß die Komponente (III) im wesentlichen bindemittelfrei ist und Wasser enthält.
Beschichtungen, hergestellt aus Beschichtungsmitteln gemäß P 44 21 823.0 zeigen einen im Vergleich zu wäßrigen Beschichtungsmitteln auf der Basis wäßriger Acrylatcopolymerisatdispersionen verbesserten Verlauf, verbesserten Glanz, verbesserte Ausspannung (geringe Narbe), geringere Kocherneigung, verbesserte Spritzsicherheit, verbesserte Fülle und eine verbesserte Witterungsbeständigkeit. Weiterhin sind solche Beschichtungsmittel für den Bereich der Automobilreparaturlackierung geeignet, d.h. bei niedrigen Temperaturen (im allgemeinen < 80 Grad C) aushärtbar und führen zu Beschichtungen, die die Anforderungen, die üblicherweise an einen Autoreparaturlack gestellt werden, weitgehend erfüllen.

Dennoch treten mitunter bei der Anwendung der 3-Komponenten-Systeme gemäß der noch unveröffentlichten deutschen Patentanmeldung P 44 21 823.0 als Autoreparaturlacke an den ausgehärteten Beschichtungen immer noch Probleme durch Kochern, Grauschleier und/oder strukturierte Oberflächen, bedingt durch schlechten Verlauf der Beschichtungsmittel, auf.

### Aufgabe und Lösung

Damit wird die Aufgabe gestellt, Beschichtungssysteme für die Autoreparaturlackierung zur Verfügung zustellen, das unter den Bedingungen der Autoreparaturlackierung zu Beschichtungen führt, die keine Oberflächenprobleme, wie Kocher oder Strukturen, sowie keine Beeinträchtigung der optischen Güte, wie Grauschleier, aufweisen.

Diese Aufgabe wurde überraschenderweise durch das Beschichtungsmittel der eingangs genannten Art gelöst, das dadurch gekennzeichnet ist, daß
1.) die Komponente (I) als Bindemittel (A)
   (A1) mindestens ein in einem oder mehreren organischen, gegebenenfalls wasserverdünnbaren Lösemitteln gelöstes oder dispergiertes, Hydroxylgruppen und Säuregruppen, die in die entsprechenden Säureaniongruppen überführbar sind, enthaltendes Acrylatcopolymerisat (Al) mit einem zahlenmittleren Molekulargewicht Mn zwischen 1.000 und 30.000 Dalton, einer OH-Zahl von 40 bis 200 mg KOH/g und einer Säurezahl von 5 bis 150 mg KOH/g und/oder
   (A2) mindestens ein in einem oder mehreren organischen, gegebenenfalls wasserverdünnbaren Lösemitteln gelöstes oder dispergiertes, Hydroxylgruppen und Säuregruppen, die in die entsprechenden Säureaniongruppen überführbar sind, enthaltendes Polyesterharz (A2) mit einem zahlenmittleren Molekulargewicht Mn zwischen 1.000 und 30.000 Dalton, einer OH-Zahl von 30 bis 250 mg KOH/g und einer Säurezahl von 5 bis 150 mg KOH/g und/oder
   (A3) mindestens ein in einem oder mehreren organischen, gegebenenfalls wasserverdünnbaren Lösemitteln gelöstes oder dispergiertes, Hydroxylgruppen und Säuregruppen, die in die entsprechenden Säureaniongruppen überführbar sind, enthaltendes Polyurethanharz (A3) mit einem zahlenmittleren Molekulargewicht Mn zwischen 1.000 und 30.000 Dalton, einer OH-Zahl von 20 bis 200 mg KOH/g und einer Säurezahl von 5 bis 150 mg KOH/g und
   (A4) gegebenenfalls mindestens ein weiteres Bindemittel
   enthält, wobei die Bindemittel (A1), (A2), (A3) und gegebenenfalls (A4) so ausgewählt werden, daß eine 50 %ige Lösung des Bindemittels (A) in Ethoxyethylpropionat bei 23°C eine Viskosität von <= 6,0 dPa.s aufweist,
2.) die Komponente (II) als Vernetzungsmittel (F) mindestens ein, gegebenenfalls in einem oder mehreren organischen Lösemitteln gelöstes oder dispergiertes, Di- und/oder Polyisocyanat (F1) und gegebenenfalls mindestens ein weiteres Vernetzungsmittel, bestehend aus mindestens einer Epoxidverbindung (F2) mit mindestens zwei Epoxidgruppen pro Molekül und gegebenenfalls mindestens einem Aminoplastharz (F3), enthält und
3.) die Komponente (III) die Komponenten (A1) und/oder (A2) und/oder (A3) und/oder (A4) in wäßriger Dispersion enthält.

Die vorliegende Erfindung betrifft außerdem ein Verfahren zur Herstellung dieser Beschichtungsmittel sowie die Verwendung der Beschichtungsmittel in der Reparaturlackierung, für die Beschichtung von Kunststoffen sowie als Decklack oder Füller.

Es ist überraschend, daß die erfindungsgemäßen Beschichtungsmittel bessere Eigenschaften aufweisen als wäßrige Beschichtungsmittel, die die gleichen Bindemittel und Vernetzer enthalten, bei denen aber die Bindemittel entweder entsprechend der Lehre der EP-B-358 979 als wäßrige Dispersion und nicht als organische Lösung bzw. Dispersion in das Beschichtungsmittel eingearbeitet wurden oder entweder entsprechend der Lehre der noch nicht veröffentlichten deutschen Patentanmeldung P 44 21 823.0 die Bindemittel und die Polyisocyanat-Vernetzer als organische Lösung in die im wesentlichen bindemittelfreie Komponente (III) eingearbeitet wurden.

So zeichnen sich die erfindungsgemäßen Beschichtungsmittel im Vergleich zu diesen Beschichtungsmitteln durch einen verbesserten Glanz, gute Fülle, geringere Kocherneigung, durch eine bessere Spritzsicherheit und durch einen verbesserten Verlauf, sowie eine gute Witterungsbeständigkeit aus.

Es ist ferner überraschend, daß die erfindungsgemäßen Beschichtungsmittel aus den mindestens drei Komponenten durch einfaches Mischen hergestellt werden können, ohne daß aufwendige Apparaturen zum Mischen bzw. Dispergieren erforderlich sind. Die erfindungsgemäßen Beschichtungsmittel eignen sich daher insbesondere für den Bereich der Autoreparaturlackierung, da die Beschichtungsmittel vom Lackierer direkt vor der Applikation der Beschichtungsmittel durch einfaches Mischen der Komponenten hergestellt und bei niedrigen Temperaturen ausgehärtet werden können.

Vorteilhaft ist ferner, daß die aus den mindestens drei Komponenten hergestellten, wäßrigen Beschichtungsmittel nur einen geringen Gehalt an flüchtigen organischen Lösemitteln aufweisen ( VOC = Volatile Organic Content <=3,2, vorzugsweise <= 2,8, pounds per gallon ), obwohl die Beschichtungsmittel unter Verwendung organisch gelöster bzw. dispergierter Bindemittel und Vernetzer hergestellt werden.
Darüber hinaus gewährleisten die erfindungsgemäßen Beschichtungsmittel eine hohe Variabilität, da nicht nur für wäßrige Beschichtungsmittel empfohlene Vernetzungsmittel, Pigmente und Additive eingesetzt werden können, sondern auch Vernetzungsmittel, Pigmente und Additive eingesetzt werden können, die in konventionellen Systemen eingesetzt werden.

Schließlich zeichnen sich die erfindungsgemäßen Komponenten der Beschichtungsmittel durch eine sehr gute Lagerstabilität aus, die der von konventionellen Beschichtungsmitteln entspricht.

### Durchführung der Erfindung

### Die Komponenten (I), (II), (III) und (IV) des erfindungsgemäßen Beschichtungsmittels

Im folgenden werden nun zunächst die einzelnen Komponenten (I), (II), (III) und (IV) des erfindungsgemäßen Beschichtungsmittels näher erläutert.

### Die Komponente (I)

Es ist erfindungswesentlich, daß die Komponente (I) des erfindungsgemäßen Beschichtungsmittels als Bindemittel (A)
(A1) mindestens ein in einem oder mehreren organischen, gegebenenfalls wasserverdünnbaren Lösemitteln gelöstes oder dispergiertes, Hydroxylgruppen und Säuregruppen, die in die entsprechenden Säureaniongruppen überführbar sind, enthaltendes Acrylatcopolymerisat (A1) mit einem zahlenmittleren Molekulargewicht Mn zwischen 1.000 und 30.000 Dalton, einer OH-Zahl von 40 bis 200 mg KOH/g und einer Säurezahl von 5 bis 150 mg KOH/g und/oder
(A2) mindestens ein in einem oder mehreren organischen, gegebenenfalls wasserverdünnbaren Lösemitteln gelöstes oder dispergiertes, Hydroxylgruppen und Säuregruppen, die in die entsprechenden Säureaniongruppen überführbar sind, enthaltendes Polyesterharz (A2) mit einem zahlenmittleren Molekulargewicht Mn zwischen 1.000 und 30.000 Dalton, einer OH-Zahl von 30 bis 250 mg KOH/g und einer Säurezahl von 5 bis 150 mg KOH/g und/oder
(A3) mindestens ein in einem oder mehreren organischen, gegebenenfalls wasserverdünnbaren Lösemitteln gelöstes oder dispergiertes, Hydroxylgruppen und Säuregruppen, die in die entsprechenden Säureanionengruppen überführbar sind, enthaltendes Polyurethanharz (A3) mit einem zahlenmittleren Molekulargewicht Mn zwischen 1.000 und 30.000 Dalton, einer OH-Zahl von 20 bis 200 mg KOH/g und einer Säurezahl von 5 bis 150 mg KOH/g und
(A4) gegebenenfalls ein weiteres Bindemittel
enthält.

Die Bindemittel (A1), (A2), (A3) und gegebenenfalls (A4) werden dabei so ausgewählt, daß eine 50 %ige Lösung des Bindemittels (A) in Ethoxyethylpropionat bei 23 Grad C eine Viskosität von kleiner gleich 6,0 dPa.s aufweist.

Als Hydroxylgruppen und Säuregruppen enthaltendes Acrylatcopolymerisat (A1) sind alle Acrylatcopolymerisate mit den angegebenen OH-Zahlen, Säurezahlen und Molekulargewichten geeignet. Bevorzugt werden Acrylatcopolymerisate eingesetzt, die als 50 %ige Lösung in Ethoxyethylpropionat bei 23 Grad C eine Viskosität <= 6,0 dPa.s aufweisen.

Bevorzugt werden ferner als Komponente (A1) Acrylatcopolymerisate eingesetzt, die erhältlich sind durch Polymerisation in einem organischen Lösemittel oder einem Lösemittelgemisch und in Gegenwart mindestens eines Polymerisationsinitiators von
a1) einem von (a2), (a3), (a4), (a5) und (a6) verschiedenen, mit (a2), (a3), (a4), (a5) und (a6) copolymerisierbaren, säuregruppenfreien (Meth)acrylsäureester oder einem Gemisch aus solchen Monomeren,
a2) einem mit (a1), (a3), (a4), (a5) und (a6) copolymerisierbaren, von (a5) verschiedenen, ethylenisch ungesättigten Monomer, das mindestens eine Hydroxylgruppe pro Molekül trägt und säuregruppenfrei ist, oder einem Gemisch aus solchen Monomeren,
a3) einem mindestens eine Säuregruppe, die in die entsprechende Saureaniongruppe überführbar ist, pro Molekül tragenden, mit (a1), (a2), (a4), (a5) und (a6) copolymerisierbaren, ethylenisch ungesättigten Monomer oder einem Gemisch aus solchen Monomeren und
a4) gegebenenfalls einem oder mehreren Vinylestern von in alpha-Stellung verzweigten Monocarbonsäuren mit 5 bis 18 C-Atomen je Molekül und/oder
a5) gegebenenfalls mindestens einem Umsetzungsprodukt aus Acrylsäure und/oder Methacrylsäure mit dem Glycidylester einer in alpha-Stellung verzweigten Monocarbonsäure mit 5 bis 18 C-Atomen je Molekül oder anstelle des Umsetzungsproduktes einer äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül umgesetzt wird,
a6) gegebenenfalls einem mit (a1), (a2), (a3), (a4), und (a5) copolymerisierbaren, von (a1), (a2), (a4) und (a5) verschiedenen, säuregruppenfreien, ethylenisch ungesättigten Monomer oder einem Gemisch aus solchen Monomeren,
wobei (a1), (a2), (a3), (a4), (a5) und (a6) in Art und Menge so ausgewählt werden, daß das Polyacrylatharz (A1) die gewünschte OH-Zahl, Säurezahl und das gewünschte Molekulargewicht aufweist.

Zur Herstellung der erfindungsgemäß eingesetzten Polyacrylatharze kann als Komponente (a1) jeder mit (a2), (a3), (a4), (a5) und (a6) copolymerisierbare, säuregruppenfreie Ester der (Meth)acrylsäure oder ein Gemisch aus solchen (Meth)acrylsäureestern eingesetzt werden. Als Beispiele werden Alkylacrylate und Alkylmethacrylate mit bis zu 20 Kohlenstoffatomen im Alkylrest, wie z.B. Methyl-, Ethyl-, Propyl-, Butyl-, Hexyl-, Ethylhexyl-, Stearyl- und Laurylacrylat und -methacrylat und cycloaliphatische (Meth)acrylsäureester, wie z.B. Cyclohexyl(meth)acrylat, Isobornyl(meth)acrylat, Dicyclopentaen(meth)acrylat und tert.-Butylcyclohexyl(meth)acrylat genannt.

Als Komponente (a1) können auch Ethyltriglykol(meth)-acrylat und Methoxyoligoglykol(meth)acrylat mit einem zahlenmittleren Molekulargewicht Mn von vorzugsweise 550 Dalton oder andere ethoxylierte und/oder propoxylierte hydroxylgruppenfreie (Meth)acrylsäurederivate eingesetzt werden.

Als Komponente (a2) können mit (a1), (a2), (a3), (a4), (a5) und (a6) copolymerisierbare und von (a5) verschiedene, ethylenisch ungesättigte Monomere, die mindestens eine Hydroxylgruppe pro Molekül tragen und säuregruppenfrei sind oder ein Gemisch aus solchen Monomeren eingesetzt werden. Als Beispiele werden Hydroxyalkylester der Acrylsäure, Methacrylsäure oder einer anderen alpha,beta-ethylenisch ungesättigten Carbonsäure genannt. Diese Ester können sich von einem Alkylenglykol ableiten, das mit der Säure verestert ist, oder sie können durch Umsetzung der Säure mit einem Alkylenoxid erhalten werden. Als Komponente (a2) werden vorzugsweise Hydroxyalkylester der Acrylsäure oder Methacrylsäure, in denen die Hydroxyalkylgruppe bis zu 20 Kohlenstoffatome enthält, Umsetzungsprodukte aus cyclischen Estern, wie z.B. epsilon-Caprolacton und diesen Hydroxyalkylestern, oder Mischungen aus diesen Hydroxyalkylestern bzw. epsilon-Caprolacton-modifizierten Hydroxyalkylestern eingesetzt.

Als Beispiele für derartige Hydroxyalkylester werden 2-Hydroxyethylacrylat, 2-Hydroxypropylacrylat, 3-Hydroxypropylacrylat, 2-Hydroxypropylmethacrylat, 3-Hydroxypropylmethacrylat, 2-Hydroxyethylmethacrylat, 4-Hydroxybutylacrylat, 4-Hydroxybutylmethacrylat, Hydroxystearylacrylat und Hydroxystearylmethacrylat genannt. Entsprechende Ester von anderen ungesättigten Säuren, wie z.B. Ethacrylsäure, Crotonsäure und ähnliche Säuren mit bis zu etwa 6 C-Atomen pro Molekül, können auch eingesetzt werden.
Ferner können als Komponente (a2) auch olefinisch ungesättigte Polyole eingesetzt werden. Bevorzugte Polyacrylatharze (A) werden erhalten, wenn als Komponente (a2) zumindest teilweise Trimethylolpropanmonoallylether eingesetzt wird. Der Anteil an Trimethylolpropanmonoallylether beträgt üblicherweise 2 bis 10 Gew.-%, bezogen auf das Gesamtgewicht der zur Herstellung des Polyacrylatharzes eingesetzten Monomeren (a1) bis (a6). Daneben ist es aber auch möglich, 2 bis 10 Gew.-%, bezogen auf das Gesamtgewicht der zur Herstellung des Polyacrylatharzes eingesetzten Monomeren, Trimethylolpropanmonoallylether zum fertigen Polyacrylatharz zuzusetzen. Die olefinisch ungesättigten Polyole, wie insbesondere Trimethylolpropanmonoallylether, können als alleinige hydroxylgruppenhaltige Monomere, insbesondere aber anteilsmäßig in Kombination mit anderen der genannten hydroxylgruppenhaltigen Monomeren, eingesetzt werden.

Als Komponente (a3) kann jedes mindestens eine Säuregruppe, vorzugsweise eine Carboxylgruppe, pro Molekül tragende, mit (a1), (a2), (a4), (a5) und (a6) copolymerisierbare, ethylenisch ungesättigte Monomer oder ein Gemisch aus solchen Monomeren eingesetzt werden. Als Komponente (a3) werden besonders bevorzugt Acrylsäure und/oder Methacrylsäure eingesetzt. Es können aber auch andere ethylenisch ungesättigte Carbonsäuren mit bis zu 6 C-Atomen im Molekül eingesetzt werden. Als Beispiele für solche Säuren werden Ethacrylsäure, Crotonsäure, Maleinsäure, Fumarsäure und Itaconsäure genannt. Weiterhin können beispielsweise ethylenisch ungesättigte Sulfon- oder Phosphonsäuren, bzw. deren Teilester, als Komponente (a3) eingesetzt werden. Als Komponente (a3) können auch Maleinsäuremono(meth)acryloyloxyethylester, Bernsteinsäuremono(meth)acryloyloxyethylester und Phthalsäuremono(meth)acryloyloxyethylester eingesetzt werden.

Als Komponente (a4) werden ein oder mehrere Vinylester von in alpha-Stellung verzweigten Monocarbonsäuren mit 5 bis 18 C-Atomen im Molekül eingesetzt. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester können aber auch auf an sich bekannte Weise aus den Säuren hergestellt werden, z.B. indem man die Säure mit Acetylen reagieren läßt.
Besonders bevorzugt werden - wegen der guten Verfügbarkeit- Vinylester von gesättigten aliphatischen Monocarbonsäuren mit 9 bis 11 C-Atomen, die am alpha-C-Atom verzweigt sind, eingesetzt.

Als Komponente (a5) wird das Umsetzungsprodukt aus Acrylsäure und/oder Methacrylsäure mit dem Glycidylester einer in alpha-Stellung verzweigten Monocarbonsäure mit 5 bis 18 C-Atomen je Molekül eingesetzt. Glycidylester stark verzweigter Monocarbonsäuren sind unter dem Handelsnamen "Cardura" erhältlich. Die Umsetzung der Acryl- oder Ethacrylsäure mit dem Glycidylester einer Carbonsäure mit einem tertiären alpha-Kohlenstoffatom kann vorher, während oder nach der Polymerisationsreaktion erfolgen. Bevorzugt wird als Komponente (a5) das Umsetzungsprodukt von Acryl- und/oder Methacrylsäure mit dem Glycidylester der Versaticsäure eingesetzt. Dieser Glycidylester ist unter dem Namen "Cardura E10" im Handel erhältlich.

Als Komponente (a6) können alle mit (a1), (a2), (a3), (a4) und (a5) copolymerisierbaren, von (a1), (a2), (a3) und (a4) verschiedenen, säuregruppenfreien ethylenisch ungesättigten Monomere oder Gemische aus solchen Monomeren eingesetzt werden. Als Komponente (a6) werden vorzugsweise vinylaromatische Kohlenwasserstoffe, wie Styrol, alpha-Alkylstyrole und Vinyltoluol, eingesetzt.

Als Komponente (a6) können in Kombination mit anderen als Komponente (a6) geeignet genannten Monomeren auch Polysiloxanmakromonomere eingesetzt werden. Geeignet sind Polysiloxanmakromonomere, die ein zahlenmittleres Molekulargewicht Mn von 1.000 bis 40.000 Dalton, bevorzugt von 2.000 bis 10.000 Dalton, und im Mittel 0,5 bis 2,5, bevorzugt 0,5 bis 1,5, ethylenisch ungesättigte Doppelbindungen pro Molekül aufweisen. Geeignet sind beispielsweise die in der DE-OS 38 07 571 auf den Seiten 5 bis 7, die in der DE-OS 37 06 095 in den Spalten 3 bis 7, die in der EP-B 358 153 auf den Seiten 3 bis 6 und die in der US-PS 4,754,014 in den Spalten 5 bis 9 beschriebenen Polysiloxanmakromonomere. Ferner sind auch andere Acryloxysilan-enthaltende Vinylmonomere mit den obengenannten Molekulargewichten und Gehalten an ethylenisch ungesättigten Doppelbindungen geeignet, beispielsweise Verbindungen, die herstellbar sind durch Umsetzung hydroxyfunktioneller Silane mit Epichlorhydrin und anschließender Umsetzung des Reaktionsproduktes mit Methacrylsäure und/oder Hydroxyalkylestern der (Meth)acrylsäure.

Bevorzugt werden als Komponente (a6) die in der noch unveröffentlichten deutschen Patentanmeldung P 44 21 823.0 angeführten Polysiloxanmakromonomere eingesetzt.

Beispiele für als Komponente (a6) geeignete Polysiloxanmakromonomere sind auch die in der internationalen Patentanmeldung mit der Veröffentlichungsnummer WO 92/22615 auf Seite 12, Zeile 18, bis Seite 18, Zeile 10, genannten Verbindungen.

Die Einsatzmenge des oder der Polysiloxanmakromonomeren (a6) zur Modifizierung der Acrylatcopolymerisate (A1) beträgt weniger als 5 Gew.-%, bevorzugt 0,05 bis 2,5 Gew.-%, besonders bevorzugt 0,05 bis 0,8 Gew.-%, jeweils bezogen auf das Gesamtgewicht der zur Herstellung des Copolymerisats (A1) eingesetzten Monomeren.

Die Verwendung derartiger Polysiloxanmakromonomerer führt zu einer Verbesserung des Slips der erfindungsgemäßen wäßrigen Beschichtungsmittel.

Die Art und Menge der Komponenten (a1) bis (a6) wird so ausgewählt, daß das Polyacrylatharz (A1) die gewünschte OH-Zahl, Säurezahl und Glasübergangstemperatur aufweist. Besonders bevorzugt eingesetzte Acrylatharze werden erhalten durch Polymerisation von
(a1) 20 bis 60 Gew.-%, bevorzugt 30 bis 50 Gew.-%, der Komponente (a1),
(a2) 10 bis 40 Gew.-%, bevorzugt 15 bis 35 Gew.-%, der Komponente (a2),
(a3) 1 bis 15 Gew.-%, bevorzugt 2 bis 8 Gew.-%, der Komponente (a3),
(a4) 0 bis 25 Gew.-%, bevorzugt 5 bis 15 Gew.-%, der Komponente (a4),
(a5) 0 bis 25 Gew.-%, bevorzugt 5 bis 15 Gew.-%, der Komponente (a5) und
(a6) 5 bis 30 Gew.-%, bevorzugt 10 bis 20 Gew.-%, der Komponente (a6),
wobei die Summe der Gewichtsanteile der Komponenten (a1) bis (a6) jeweils 100 Gew.-% beträgt.

Die Herstellung der erfindungsgemäß eingesetzten Polyacrylatharze (A1) erfolgt in einem organischen Lösemittel oder Lösemittelgemisch und in Gegenwart mindestens eines Polymerisationsinitiators. Als organische Lösemittel und Polymerisationsinitiatoren werden die für die Herstellung von Polyacrylatharzen üblichen und für die Herstellung von wäßrigen Dispersionen geeigneten Lösemittel und Polymerisationsinitiatoren eingesetzt. Dabei können die Lösemittel an der Reaktion mit der vernetzenden Komponente (II) teilnehmen und somit als Reaktivverdünner wirken.
Als Beispiele für brauchbare Lösemittel werden Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykolmonomethylether, Diethylenglykolmonoethylether, Diethylenglykoldiethylether, Diethylenglykolmonobutylether, Trimethylolpropan, 2-Hydroxypropionsäureethylester und 3-Methyl-3-methoxybutanol sowie Derivate auf Basis von Propylenglykol, z.B. Ethylethoxypropionat, Isopropoxypropanol, Methoxypropylacetat und ähnliche, genannt.
Es ist dabei auch möglich, die Polyacrylatarze (A1) zunächst in einem Lösemittel, das nicht wasserverdünnbar ist, herzustellen und dieses Lösemittel nach der Polymerisation gegebenenfalls teilweise durch wasserverdünnbares Lösemittel zu ersetzen.
Als Beispiele für brauchbare Polymerisationsinitiatoren werden freie Radikale bildende Initiatoren, wie z.B. tert.-Butylperoxyethylhexanoat, Benzoylperoxid, Azobisisobutyronitril und tert.-Butylperbenzoat genannt. Die Initiatoren werden bevorzugt in einer Menge von 2 bis 25 Gew.-%, besonders bevorzugt von 4 bis 10 Gew.-%, bezogen auf das Gesamtgewicht der Monomeren, eingesetzt.

Die Polymerisation wird zweckmäßigerweise bei einer Temperatur von 80 bis 160 Grad C, vorzugsweise 110 bis 160 Grad C, durchgeführt. Bevorzugt werden als Lösemittel Ethoxyethylpropionat und Isopropoxypropanol eingesetzt.

Bevorzugt wird das Polyacrylatharz (A1) nach einem Zweistufenverfahren hergestellt, da so die resultierenden wäßrigen Beschichtungsmittel eine bessere Verarbeitbarkeit aufweisen. Bevorzugt werden daher Polyacrylatharze eingesetzt, die erhältlich sind, indem
1. ein Gemisch aus (a1), (a2), (a4), (a5) und (a6) oder ein Gemisch aus Teilen der Komponenten (a1), (a2) , (a4), (a5) und (a6) in einem organischen Lösemittel polymerisiert wird,
2. nachdem mindestens 60 Gew.-% des aus (a1), (a2), (a4), (a5) und gegebenenfalls (a6) bestehenden Gemisches zugegeben worden sind, (a3) und der gegebenenfalls vorhandene Rest der Komponenten (a1), (a2), (a4), (a5) und (a6) zugegeben werden und weiter polymerisiert wird und
3. nach Beendigung der Polymerisation das erhaltene Polyacrylatharz gegebenenfalls zumindest teilweise neutralisiert wird, d.h. die Säuregruppen in die entsprechende Säureaniongruppen überführt werden.

Daneben ist es aber auch möglich, die Komponenten (a4) und/oder (a5) zusammen mit zumindest einem Teil des Lösemittels vorzulegen und die restlichen Komponenten zuzudosieren. Außerdem können auch die Komponenten (a4) und/oder (a5) nur teilweise zusammen mit zumindest einem Teil des Lösemittels in die Vorlage gegeben werden und der Rest dieser Komponenten wie oben beschrieben zugegeben werden. Bevorzugt werden beispielsweise mindestens 20 Gew.-% des Lösemittels und ca. 10 Gew.-% der Komponente (a4) und (a5) sowie gegebenenfalls Teilen der Komponenten (a1) und (a6) vorgelegt.
Bevorzugt ist außerdem die Herstellung der erfindungsgemäß eingesetzten Polyacrylatharze (A1) durch ein Zweistufenverfahren, bei dem die Stufe (I) 1 bis 8 Stunden, vorzugsweise 1,5 bis 4 Stunden, dauert und die Zugabe der Mischung aus (a3) und dem gegebenenfalls vorhandenen Rest der Komponenten (a1), (a2), (a4), (a5) und (a6) innerhalb von 20 bis 120 Minuten, vorzugsweise innerhalb von 30 bis 90 Minuten, erfolgt. Nach Beendigung der Zugabe der Mischung aus (a3)und dem gegebenenfalls vorhandenen Rest der Komponenten (a1), (a2), (a4), (a5) und (a6) wird so lange weiter polymerisiert, bis alle eingesetzten Monomeren im wesentlichen vollständig umgesetzt worden sind.

Die Menge und Zugabegeschwindigkeit des Initiators wird vorzugsweise so gewählt, daß ein Polyacrylatharz (A1) mit einem zahlenmittleren Molekulargewicht Mn von 1000 bis 30.000 Dalton erhalten wird. Es ist bevorzugt, daß mit dem Initiatorzulauf einige Zeit, im allgemeinen ca. 15 Minuten, vor dem Zulauf der Monomeren begonnen wird. Ferner ist ein Verfahren bevorzugt, bei dem die Initiatorzugabe zum gleichen Zeitpunkt wie die Zugabe der Monomeren begonnen und etwa eine halbe Stunde nachdem die Zugabe der Monomeren beendet worden ist, beendet wird. Der Initiator wird vorzugsweise in konstanter Menge pro Zeiteinheit zugegeben. Nach Beendigung der Initiatorzugabe wird das Reaktionsgemisch noch so lange (in der Regel 1,5 Stunden) auf Polymerisationstemperatur gehalten, bis alle eingesetzten Monomere im wesentlichen vollständig umgesetzt worden sind. "Im wesentlichen vollständig umgesetzt" soll bedeuten, daß vorzugsweise 100 Gew.-% der eingesetzten Monomere umgesetzt worden sind, daß es aber auch möglich ist, daß ein geringer Restmonomerengehalt von höchstens bis zu etwa 0,5 Gew.-%, bezogen auf das Gewicht der Reaktionsmischung, unumgesetzt zurückbleiben kann.
Bevorzugt werden die Monomeren zur Herstellung der Polyacrylatharze (A1) bei einem nicht allzu hohen Polymerisationsfestkörper, bevorzugt bei einem Polymerisationsfestkörper von 80 bis 50 Gew.-%, polymerisiert und anschließend die Lösemittel teilweise destillativ entfernt, so daß die entstehenden Polyacrylatharzlösungen einen Festkörpergehalt von bevorzugt 80 bis 60 Gew.-% aufweisen.

Als Hydroxylgruppen und Säuregruppen, die in die entsprechenden Säureaniongruppen überführbar sind, enthaltenden Polyester (A2) sind alle Polyester mit den angegebenen OH-Zahlen, Säurezahlen und Molekularzahlen geeignet. Bevorzugt werden Polyester eingesetzt, die als 50 %ige Lösung in Ethoxyethylpropionat bei 23 Grad C eine Viskosität <= 6,0 dPa.s aufweisen.

Bevorzugt werden als Komponente (A2) Polyester eingesetzt, die sind erhältlich durch Umsetzung von
p1) Polycarbonsäuren oder deren veresterungsfähigen Derivaten, gegebenenfalls zusammen mit Monocarbonsäuren,
p2) Polyolen, gegebenenfalls zusammen mit Monoolen,
p3) gegebenenfalls weiteren modifizierenden Komponenten und
p4) gegebenenfalls einer mit dem Reaktionsprodukt aus (p1), (p2) und gegebenenfalls (p3) reaktionsfähigen Komponente.

Als Beispiele für Polycarbonsäuren, die als Komponente (p1) eingesetzt werden können, seien aromatische, aliphatische und cycloaliphatische Polycarbonsäuren genannt. Bevorzugt werden als Komponente (p1) werden aromatische und/oder aliphatische Polycarbonsäuren eingesetzt.

Beispiele für geeignete Polycarbonsäuren sind Phthalsäure, Isophthalsäure, Terephthalsäure, Halogenphthalsäuren, wie Tetrachlor- bzw. Tetrabromphthalsäure, Adipinsäure, Glutarsäure, Acelainsäure, Sebacinsäure, Fumarsäure, Maleinsäure, Trimellithsäure, Pyromellithsäure, Tetrahydrophthalsäure, Hexahydrophthalsäure, 1,2-Cyclohexandicarbonsäure, 1,3-Cyclohexandicarbonsäure, 1,4-Cyclohexandicarbonsäure, 4-Methylhexahydrophthalsäure, Endomethylentetrahydrophthalsäure, Tricyclodecan-Dicarbonsäure, Endoethylenhexahydrophthalsäure, Camphersäure, Cyclohexantetracarbonsäure, Cyclobutantetracarbonsäure und andere. Die cycloaliphtatischen Polycarbonsäuren können sowohl in ihrer cisals auch in ihrer trans-Form sowie als Gemisch beider Formen eingesetzt werden. Geeignet sind auch die veresterungsfähigen Derivate der obengenannten Polycarbonsäuren, wie z.B. deren ein- oder mehrwertige Ester mit aliphatischen Alkoholen mit 1 bis 4-C-Atomen oder Hydroxyalkoholen mit 1 bis 4 C-Atomen. Außerdem können auch die Anhydride der obengenannten Säuren eingesetzt werden, sofern sie existieren.

Gegebenenfalls können zusammen mit den Polycarbonsäuren auch Monocarbonsäuren eingesetzt werden, wie beispielsweise Benzoesäure, tert.-Butylbenzoesäure, Laurinsäure, Isononansäure und Fettsäuren natürlich vorkommender Öle. Bevorzugt wird als Monocarbonsäure Isononansäure eingesetzt.

Geeignete Alkoholkomponenten (p2) zur Herstellung des Polyesters (A2) sind mehrwertige Alkohole, wie Ethylenglykol, Propandiole, Butandiole, Hexandiole, Hydroxypivalinsäureneopentylester, Neopentylglykol, Diethylenglykol, Cyclohexandiol, Cyclohexandimethanol, Trimethylpentandiol, Ethylbutylpropandiol, Ditrimethylolpropan, Trimethylolethan, Trimethylolpropan, Glycerin, Pentaerythrit, Dipentaerythrit, Trishydroxiethylisocyanat, Polyethylenglykol, Polypropylenglykol, gegebenenfalls zusammen mit einwertigen Alkoholen, wie beispielsweise Butanol, Octanol, Laurylalkohol, Cyclohexanol, tert.-Butylcyclohexanol, ethoxylierten bzw. propoxylierten Phenolen.

Als Komponente (p3) zur Herstellung der Polyester (A2) geeignet sind insbesondere Verbindungen, die eine gegenüber den funktionellen Gruppen des Polyesters reaktive Gruppe aufweisen, ausgenommen die als Komponente (p4) genannten Verbindungen. Als modifizierende Komponente (p3) werden bevorzugt Polyisocyanate und/oder Diepoxydverbindungen, gegebenenfalls auch Monoisocyanate und/oder Monoepoxydverbindungen verwendet. Geeignete Komponenten (p3) sind beispielsweise in der DE-A-40 24 204 auf Seite 4, Zeilen 4 bis 9, beschrieben.

Als Komponente (p4) zur Herstellung der Polyester (A2) geeignet sind Verbindungen, die außer einer gegenüber den funktionellen Gruppen des Polyesters (A2) reaktiven Gruppe noch eine tertiäre Aminogruppe aufweisen, beispielsweise Monoisocyanate mit mindestens einer tertiären Aminogruppe oder Mercaptoverbindungen mit mindestens einer tertiären Aminogruppe. Wegen Einzelheiten wird auf die DE-A-40 24 204, Seite 4, Zeilen 10 bis 49, verwiesen.

Die Herstellung der Polyester (A2) erfolgt nach den bekannten Methoden der Veresterung, wie dies beispielsweise in der DE-A-40 24 204, Seite 4, Zeilen 50 bis 65, beschrieben ist.
Die Umsetzung erfolgt dabei üblicherweise bei Temperaturen zwischen 180 und 280 Grad C, gegebenenfalls in Gegenwart eines geeigneten Veresterungskatalysators, wie z.B. Lithiumoctoat, Dibutylzinnoxid, Dibutylzinndilaurat, para-Toluolsulfonsäure und ähnlichen.

Üblicherweise wird die Herstellung der Polyester (A2) in Gegenwart geringer Mengen eines geeigneten Lösungsmittels als Schleppmittel durchgeführt. Als Schleppmittel werden z. B. aromatische Kohlenwasserstoffe, wie insbesondere Xylol und (cyclo)aliphatische Kohlenwasserstoffe, z. B. Cyclohexan, eingesetzt.

Besonders bevorzugt werden als Komponente (A2) Polyester eingesetzt, die nach einem zweistufigen Verfahren hergestellt worden sind, indem zunächst ein hydroxylgruppenhaltiger Polyester mit einer OH-Zahl von 100 bis 300 mgKOH/g, einer Säurezahl von weniger als 10 mgKOH/g und einem zahlenmittleren Molekulargewicht Mn von 500 bis 2000 Dalton hergestellt wird, der dann in einer zweiten Stufe mit Carbonsäureanhydriden zu dem gewünschten Polyester (A2) umgesetzt wird. Die Menge an Carbonsäureanhydriden wird dabei so gewählt, daß der erhaltene Polyester die gewünschte Säurezahl aufweist. Für diese Umsetzung sind alle üblicherweise eingesetzten Säureanhydride, wie z.B. Hexahydrophthalsäureanhydrid, Trimellithsäureanhydrid, Pyromellithsäureanhydrid, Phthalsäureanhydrid, Camphersäureanhydrid, Tetrahydrophthalsäureanhydrid, Bernsteinsäureanhydrid und Gemische dieser und/oder anderer Anhydride und insbesondere Anhyride aromatischer Polycarbonsäuren, wie Trimellithsäureanhydrid, geeignet.

Es ist gegebenenfalls möglich, daß das Polyacrylatharz (A1) zumindest teilweise in Gegenwart des Polyesters (A2) hergestellt worden ist. Vorteilhafterweise werden in diesem Fall mindestens 20 Gew.-% und besonders vorteilhafterweise 40 bis 80 Gew.-% der Komponente (A1) in Gegenwart der Komponente (A2) hergestellt.
Die gegebenenfalls restlich vorhandene Menge der Komponente (A1) wird der Bindemittel lösung anschließend zugegeben. Dabei ist es möglich, daß dieses bereits polymerisierte Harz die gleiche Monomerzusammensetzung aufweist wie das in Gegenwart des Polyesters aufgebaute Polyacrylatharz. Es kann aber auch ein hydroxylgruppenhaltiges Polyacrylatharz mit einer unterschiedlichen Monomerzusammensetzung zugefügt werden. Außerdem ist es möglich, eine Mischung verschiedener Polyacrylatharze und/oder Polyester zuzufügen, wobei gegebenenfalls ein Harz die gleiche Monomerzusammensetzung aufweist wie das in Gegenwart des Polyesters aufgebaute Polyacrylatharz.

Als hydroxyl- und säuregruppenhaltiges Polyurethanharz (A3) sind alle Polyurethanharze mit den angegebenen OH-Zahlen, Säurezahlen und Molekularzahlen geeignet. Bevorzugt werden Polyurethanharze eingesetzt, die als 50 %ige Lösung in Ethoxyethylpropionat bei 23 Grad C eine Viskosität <= 6,0 dPa.s aufweisen.

Geeignete Polyurethanharze werden beispielsweise in den folgenden Schriften beschriebenen: EP-A-355 433, DE-A-35 45 618, DE-A-38 13 866. DE-A-32 10 051, DE-A-26 24 442, DE-A-37 39 332, US-A-4,719,132, EP-A-89 497, US-A-4,558,090, US-A-4,489,135, DE-A-36 28 124, EP-A-158 099, DE-A-29 26 584, EP-A-195 931, DE-A-33 21 180 und DE-A-40 05 961.

In der Komponente (I) werden vorzugsweise Polyurethanharze eingesetzt, die durch Umsetzung von isocyanatgruppenhaltigen Präpolymeren mit gegenüber Isocyanatgruppen reaktiven Verbindungen herstellbar sind.

Die Herstellung von isocyanatgruppenhaltigen Präpolymeren kann durch Reaktion von Polyolen mit einer Hydroxylzahl von 10 bis 1800, bevorzugt 50 bis 1200 mg KOH/g, mit überschüssigen Polyisocyanaten bei Temperaturen von bis zu 150 Grad C, bevorzugt 50 bis 130 Grad C, in organischen Lösemitteln, die nicht mit Isocyanaten reagieren können, erfolgen. Das Äquivalentverhältnis von NCO- zu OH-Gruppen liegt zwischen 2,0:1,0 und > 1,0:1,0, bevorzugt zwischen 1,4:1 und 1,1:1.

Die zur Herstellung des Präpolymeren eingesetzten Polyole können niedermolekular und/oder hochmolokular sein und reaktionsträge anionische bzw. zur Anionenbildung befähigte Gruppen enthalten. Es können auch niedermolekulare Polyole mit einem Molekulargewicht von 60 bis zu 400 Dalton, zur Herstellung der isocyanatgruppenhaltigen Präpolymere mitverwendet werden. Es werden dabei Mengen von bis zu 30 Gew.-% der gesamten Polyol-Bestandteile, bevorzugt etwa 2 bis 20 Gew.-%, eingesetzt.
Um ein NCO-Präpolymeres hoher Flexibilität zu erhalten, sollte ein hoher Anteil eines überwiegend linearen Polyols mit einer bevorzugten OH-Zahl von 30 bis 150 mg KOH/g zugesetzt werden. Bis zu 97 Gew.-% des gesamten Polyols können aus gesättigten und ungesättigten Polyestern und/oder Polyethern mit einer zahlenmittleren Molerkulargewicht Mn von 400 bis 5000 Dalton bestehen. Die ausgewählten Polyetherdiole sollen keine übermäßigen Mengen an Ethergruppen einbringen, weil sonst die gebildeten Polymere in Wasser anquellen. Polyesterdiole werden durch Veresterung von organischen Dicarbonsäuren oder ihren Anhydriden mit organischen Diolen hergestellt oder leiten sich von einer Hydroxycarbonsäure oder einem Lacton ab. Um verzweigte Polyesterpolyole herzustellen, können in geringem Umfang Polyole oder Polycarbonsäuren mit einer höheren Wertigkeit eingesetzt werden.

Bevorzugt besteht die zur Herstellung der Polyurethanharze eingesetzte Alkoholkomponente zumindest zu einem gewissen Anteil aus
a₁) mindestens einem Diol der Formel (I') 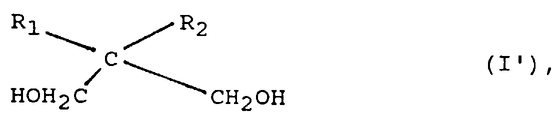 in der R₁ und R₂ jeweils einen gleichen oder verschiedenen Rest darstellen und für einen Alkylrest mit 1 bis 18 C-Atomen, einen Arylrest oder einen cycloaliphatischen Rest stehen, mit der Maßgabe, daß R₁ und/oder R₂ nicht Methyl sein darf, und/oder
a₂) mindestens einem Diol der Formel (II') 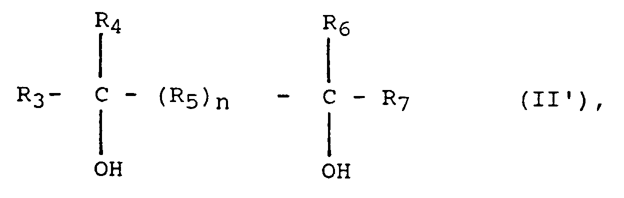 in der R₃, R₄, R₆ und R₇ jeweils gleiche oder verschiedene Reste darstellen und für einen Alkylrest mit 1 bis 6 C-Atomen, einen Cycloalkylrest oder einen Arylrest stehen und R₅ einen Alkylrest mit 1 bis 6 C-Atomen, einen Arylrest oder einen ungesättigten Alkylrest mit 1 bis 6 C-Atomen darstellt, und n entweder 0 oder 1 ist.

Als Komponente (a₁) sind alle Propandiole der Formel (I') geeignet, bei denen entweder R₁ oder R₂ oder R₁ und R₂ nicht gleich Methyl ist, wie beispielsweise 2-Butyl-2-ethylpropandiol-1,3, 2-Butyl-2-methylpropandiol-1,3, 2-Phenyl-2-methylpropan-diol-1,3, 2-Propyl-2-ethylpropandiol-1,3, 2-Di-tert.-butylpropandiol-1,3, 2-Butyl-2-propylpropandiol-1,3, l-Dihydroxymethyl-bicyclo[2.2.1]heptan, 2,2-Diethylpro-pandiol-1,3, 2,2-Dipropylpropandiol-1,3, 2-Cyclo-hexyl-2-methylpropandiol-1,3 und andere.

Als Komponente (a₂) (Formel (II')) können beispielsweise 2,5-Dimethyl-hexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3, 1,4-(2'-Hydroxypropyl)-benzol und 1,3-(2'-Hydroxypropyl)-benzol eingesetzt werden.

Bevorzugt werden als Komponente (a₁) 2-Propyl-2-ethylpropandiol-1,3, 2,2-Diethylpropandiol-1,3, 2-Butyl-2-ethylpropandiol-1,3 und 2-Phenyl-2-ethyl-propandiol-1,3 und als Komponente (a₂) 2,3-Dimethyl-butandiol-2,3 sowie 2,5-Dimethylhexandiol-2,5 eingesetzt. Besonders bevorzugt werden als Komponente (a₁) 2-Butyl-2-ethylpropandiol-1,3 sowie 2-Phenyl-2-ethylpropandiol-1,3 und als Komponente (a₂) 2,5-Dimethylhexandiol-2,5 eingesetzt.

Die Komponenten (a₁) und/oder (a₂) werden üblicherweise in einer Menge von 0,5 bis 15 Gew.-%, bevorzugt 1 bis 7 Gew.-% eingesetzt, jeweils bezogen auf das Gesamtgewicht der zur Herstellung der Polyurethanharze (A3) eingesetzten Aufbaukomponenten.

Als typische multifunktionelle Isocyanate zur Herstellung der Polyurethanharze werden aliphatische, cycloaliphatische und/oder aromatische Polyisocyanate mit mindestens zwei Isocyanatgruppen pro Molekül verwendet. Bevorzugt werden die Isomeren oder Isomerengemische von organischen Diisocyanaten. Aufgrund ihrer guten Beständigkeit gegenüber ultraviolettem Licht ergeben (cyclo)-aliphatische Diisocyanate Produkte mit geringer Vergilbungsneigung. Die zur Bildung des Präpolymeren gebrauchte Polyisocyanat-Komponente kann auch einen Anteil höherwertiger Polyisocyanate enthalten, vorausgesetzt dadurch wird keine Gelbildung verursacht. Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Die mittlere Funktionalität kann gegebenenfalls durch Zusatz von Monoisocyanaten gesenkt werden.

Als Beispiele für einsetzbare Polyisocyanate werden Phenylendiisocyanat, Toluylendiisocyanat, Xylylendiisocyanat, Bisphenylendiisocyanat, Naphtylendiisocyanat, Diphenylmethandiisocyanat, Isophorondiisocyanat, Cyclobutandiisocyanat Cyclopentylendiisocyanat, Cyclohexylendiisocyanat, Methylcyclohexylendiisocyanat, Dicyclohexylmethandiisocyanat, Ethylendiisocyanat, Trimethylendiisocyanat, Tetramethylendiisocyanat, Pentamethylendiisocyanat, Hexamethylendiisocyanat, Propylendiisocyanat, Ethylethylendiisocyanat und Trimethylhexandiisocyanat genannt.

Zur Herstellung festkörperreicher Polyurethanharzlösungen werden insbesondere Diisocyanate der allgemeinen Formel (III') 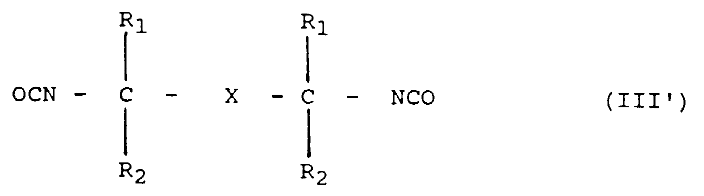 eingesetzt, wobei X für einen zweiwertigen, aromatischen Kohlenwasserstoffrest, vorzugsweise für einen ggf. Halogen-, Methyl- oder Methoxy-substituierten Naphthylen-, Diphenylen- oder 1,2-, 1,3- oder 1,4-Phenylenrest, besonders bevorzugt für einen 1,3-Phenylenrest und R₁ und R₂ für einen Alkylrest mit 1 - 4 C-Atomen, bevorzugt für einen Methylrest, stehen. Diisocyanate der Formel (III') sind bekannt (ihre Herstellung wird beispielsweise in der EP-A-101 832, US-PS-3,290,350, US-PS-4,130,577 und der US-PS-4,439,616 beschrieben) und zum Teil im Handel erhältlich (1,3-Bis-(2-isocyanatoprop-2-yl)-benzol wird beispielsweise von der American Cynamid Company unter dem Handelsnamen TMXDI (META)® verkauft).
Weiterhin bevorzugt als Polyisocyanatkomponente sind Diisocyanate der Formel (IV'): 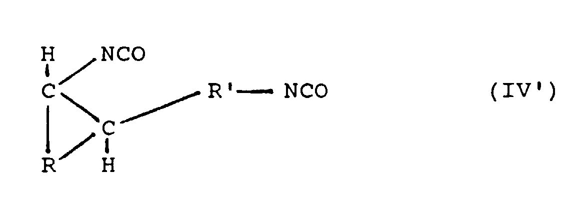 mit:
R für einen zweiwertigen Alkyl- oder Aralkylrest mit 3 bis 20 Kohlenstoffatomen und
R' für einen zweiwertigen Alkyl- oder Aralkylrest mit 1 bis 20 Kohlenstoffatomen.

Polyurethane sind im allgemeinen nicht mit Wasser verträglich, wenn nicht bei ihrer Synthese spezielle Bestandteile eingebaut und/oder besondere Herstellungsschritte vorgenommen werden. So können zur Herstellung der Polyurethanharze Verbindungen verwendet werden, die zwei mit Isocyanatgruppen reagierende H-aktive Gruppen und mindestens eine Gruppe enthalten, die die Wasserdispergierbarkeit gewährleistet. Geeignete Gruppen dieser Art sind nichtionische Gruppen (z. B. Polyether), anionische Gruppen, Gemische dieser beiden Gruppen oder kationische Gruppen.

So kann eine so große Säurezahl in das Polyurethanharz eingebaut werden, daß das neutralisierte Produkt stabil in Wasser zu dispergieren ist. Hierzu dienen Verbindungen, die mindestens eine gegenüber Isocyanatgruppen reaktive Gruppe und mindestens eine zur Anionenbildung befähigte Gruppe enthalten. Geeignete gegenüber Isocyanatgruppen reaktive Gruppen sind insbesondere Hydroxylgruppen sowie primäre und/oder sekundäre Aminogruppen. Gruppen, die zur Anionenbildung befähigt sind, sind Carboxyl-, Sulfonsäure- und/oder Phosphonsäuregruppen. Vorzugsweise werden Alkansäuren mit zwei Substituenten am alphha-ständigen Kohlenstoffatom eingesetzt. Der Substituent kann eine Hydroxylgruppe, eine Alkylgruppe oder eine Alkylolgruppe sein. Diese Polyole haben wenigstens eine, im allgemeinen 1 bis 3 Carboxylgruppen im Molekül. Sie haben zwei bis etwa 25, vorzugsweise 3 bis 10 Kohlenstoffatome. Das Carboxylgruppen enthaltene Polyol kann 3 bis 100 Gew.-%, vorzugsweise 5 bis 50 Gew.-%, des gesamten Polyolbestandteiles im NCO-Präpolymeren ausmachen.

Die durch die Carboxylgruppenneutralisation in Salzform verfügbare Menge an ionisierbaren Carboxylgruppen beträgt im allgemeinen wenigstens 0,4 Gew.-%, vorzugsweise wenigstens 0,7 Gew.-%, bezogen auf den Feststoff. Die obere Grenze beträgt etwa 12 Gew.-%. Die Menge an Dihydroxyalkansäuren im unneutralisierten Präpolymer ergibt eine Säurezahl von wenigstens 5 mg KOH/g, vorzugsweise wenigstens 10 mg KOH/g. Bei sehr niedrigen Säurezahlen sind im allgemeinen weitere Maßnahmen zur Erzielung der Wasserdispergierbarkeit erforderlich. Die obere Grenze der Säurezahl liegt bei 150 mg KOH/g, vorzugsweise bei 40 mg KOH/g, bezogen auf den Feststoff. Bevorzugt liegt die Säurezahl im Bereich von 20 bis 40 mg KOH/g.

Die Isocyanatgruppen des isocyanatgruppenhaltigen Präpolymers werden mit einem Modifizierungsmittel umgesetzt. Das Modifizierungsmittel wird dabei vorzugsweise in einer solchen Menge zugegeben, daß es zu Kettenverlängerungen und damit zu Molekulargewichtserhöhungen kommt. Als Modifizierungsmittel werden vorzugsweise organische Verbindungen, die Hydroxyl- und/oder sekundäre und/oder primäre Aminogruppen enthalten, insbesondere di-, tri- und/oder höherfunktionelle Polyole, eingesetzt. Als Beispiel für einsetzbare Polyole werden Trimethylolpropan, 1,3,4 Butantriol, Glycerin, Erythrit, Mesoerythrit, Arabit, Adonit usw. genannt. Bevorzugt wird Trimethylolpropan eingesetzt.

Zur Herstellung des erfindungsgemäßen Polyurethanharzes wird bevorzugt zunächst ein Isocyanatgruppen aufweisendes Präpolymer hergestellt, aus dem dann durch weitere Umsetzung, bevorzugt Kettenverlängerung, das gewünschte Polyurethanharz hergestellt wird. Die Umsetzung der Komponenten erfolgt dabei nach den gut bekannten Verfahren der organischen Chemie (vgl. z.B. Kunststoff-Handbuch, Band 7: Polyurethane, herausgegeben von Dr. Y. Oertel, Carl Hanser Verlag, München, Wien 1983). Beispiele für die Herstellung der Präpolymeren sind in der DE-OS 26 24 442 und der DE-OS 32 10 051 beschrieben. Die Herstellung der Polyurethanharze kann nach den bekannten Verfahren erfolgen (z.B. Acetonverfahren).

Die Umsetzung der Komponenten erfolgt bevorzugt in Ethoxyethylpropionat (EEP) als Lösemittel. Die Menge an Ethoxyethylpropionat kann dabei in weiten Grenzen variieren und sollte zur Bildung einer Präpolymerlösung mit geeigneter Viskosität ausreichen. Im allgemeinen werden bis zu 70 Gew.-%, bevorzugt 5 bis 50 Gew.-% und besonders bevorzugt weniger als 20 Gew.-% Lösemittel, bezogen auf den Festkörper, eingesetzt. So kann die Umsetzung beispielsweise ganz besonders bevorzugt bei einem Lösemittelgehalt von 10 - 15 Gew.-% EEP, bezogen auf den Festkörper, durchgeführt werden.
Die Umsetzung der Komponenten kann gegebenenfalls in Gegenwart eines Katalysators, wie Organozinnverbindungen und/oder tertiären Aminen, erfolgen.
Zur Herstellung der Präpolymeren werden die Mengen der Komponenten so gewählt, daß das Äquivalentverhältnis von NCO- zu OH-Gruppen zwischen 2,0 : 1,0 und > 1,0 : 1,0, bevorzugt zwischen 1,4 : 1 und 1,1 : 1, liegt. Das NCO-Präpolymer enthält wenigstens etwa 0,5 Gew.-% Isocyanatgruppen, vorzugsweise wenigstens 1 Gew.-% NCO, bezogen auf den Feststoff. Die obere Grenze liegt bei etwa 15 Gew.-%, vorzugsweise 10 Gew.-%, besonders bevorzugt bei 5 Gew.-% NCO.

Als Komponente (A4) geeignet sind alle mit den übrigen Bestandteilen der Komponente (I) verträglichen, wasserverdünnbaren Bindemittel, beispielsweise acrylierte Polyurethanharze und/oder Polyesteracrylate.

Bevorzugt enthält die Komponente (I) als Bindemittel (A)
mindestens 20 Gew.-% (A1),
0 bis 30 Gew.-% (A2),
0 bis 80 Gew.-% (A3) und gegebenenfalls
0 bis 10 Gew.-% (A4),
wobei die Summe der Gewichtsanteile der Kom onenten (A1) bis (A4) jeweils 100 Gew.-% bezogen auf das Bindemittel (A) beträgt.

Die Komponente (I) kann als Bestandteil (B) alle lacküblichen Pigmente in Anteilen von 0 bis 60 Gew.-%, bezogen auf Komponente I,enthalten. Dabei können sowohl die in wäßrigen Beschichtungsmitteln üblichen Pigmente, die mit Wasser nicht reagieren bzw. sich in Wasser nicht lösen, als auch die üblicherweise in konventionellen Beschichtungsmitteln eingesetzten Pigmente eingesetzt werden. Die Pigmente können aus anorganischen oder organischen Verbindungen bestehen und können effekt- und/oder farbgebend sein. Das erfindungsgemäße Beschichtungsmittel gewährleistet daher aufgrund dieser Vielzahl geeigneter Pigmente eine universelle Einsatzbreite der Beschichtungsmittel und ermöglicht die Realisierung einer Vielzahl von Farbtönen.
Als Effektpigmente können Metallplättchenpigmente, wie handelsübliche Aluminiumbronzen, gemäß DE-A-36 36 183 chromatierte Aluminiumbronzen, und handelsübliche Edelstahlbronzen sowie nicht metallische Effektpigmente, wie zum Beispiel Perlglanz- bzw. Interferenzpigmente, eingesetzt werden. Beispiele für geeignete anorganische farbgebende Pigmente sind Titandioxid, Eisenoxide, Sicotransgelb und Ruß. Beispiele für geeignete organische farbgebende Pigmente sind Indanthrenblau, Cromophthalrot, Irgazinorange und Heliogengrün.

Als Bestandteil (C) enthält die Komponente (I) mindestens ein organisches, gegebenenfalls wasserverdünnbares Lösemittel. Solche Lösemittel können auch an der Reaktion mit der vernetzenden Komponente (II) teilnehmen und somit als Reaktivverdünner wirken.

Beispiele für geeignete Lösemittel sind die schon bei der Herstellung der Polyacrylatharze (A1) genannten Verbindungen (siehe oben) Weiterhin geeignet sind Ester, Ketone, Ketoester, Glykoletherester und ähnliche. Bevorzugt eingesetzt werden Ester, Alkohole und Glykolether, besonders bevorzugt Ethoxyethylpropionat und Isopropoxypropanol.
Die Lösemittel (C) können weiterhin teilweise oder vollständig aus niedermolekularen oligomeren Verbindungen bestehen, die gegenüber der vernetzenden Komponente (II) reaktiv oder auch nicht reaktiv sein können.

Als Bestandteil (D) enthält die Komponente (I) gegebenenfalls mindestens ein Neutralisationsmittel. Beispiele für geeignete Neutralisationsmittel sind Ammoniak, Ammoniumsalze, wie beispielsweise Ammoniumcarbonat oder Ammoniumhydrogencarbonat, sowie Amine, wie z.B. Trimethylamin, Triethylamin, Tributylamin, Dimethylanilin, Diethylanilin, Triphenylamin, Dimethylethanolamin, Diethylethanolamin, Methyldiethanolamin, Triethanolamin und dergleichen. Die Neutralisation kann in organischer Phase oder in wäßriger Phase erfolgen. Bevorzugt wird als Neutralisationsmittel Dimethylethanolamin eingesetzt.
Die insgesamt in dem erfindungsgemäßen Beschichtungsmittel eingesetzte Menge an Neutralisationsmittel wird so gewählt, daß 1 bis 100 Äquivalente, bevorzugt 50 bis 90 Äquivalente der Säuregruppen des Bindemittels (A) neutralisiert werden.
Das Neutralisationsmittel kann dabei der Komponente (I) und/oder (II) und/oder (III) und/oder (IV) zugesetzt werden. Bevorzugt wird das Neutralisationsmittel aber der Komponente (III) zugesetzt.

Als Bestandteil (E) kann die Komponente (I) mindestens ein rheologiesteuerndes Additiv enthalten. Als Beispiele für rheologiesteuernde Additive werden genannt: vernetzte polymere Mikroteilchen, wie sie beispielsweise in der EP-A-38 127 offenbart sind, anorganische Schichtsilikate, wie z.B. Aluminium-Magnesium-Silikate, Natrium-Magnesium-Schichtsilikate und Natrium-Magnesium-Fluor-Lithium-Schichtsilikate des Montmorillonit-Typs, sowie synthetische Polymere mit ionischen und/oder assoziativ wirkenden Gruppen, wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder auch hydrophob modifizierte ethoxylierte Urethane oder Polyacrylate. Bevorzugt werden als rheologiesteuernde Additive Polyurethane eingesetzt.

Die Komponente (I) kann außerdem mindestens noch ein weiteres übliches Lackadditiv enthalten. Beispiele für derartige Additive sind Entschäumer, Dispergierhilfsmittel, Emulgatoren, und Verlaufshilfsmittel.

Selbstverständlich können die genannten Additive auch separat dem Beschichtungsmittel zugesetzt werden. In diesem Fall werden die Additive dann als Komponente (IV) bezeichnet.

Bevorzugt werden zur Herstellung der erfindungsgemäßen Beschichtungsmittel Komponenten (I) eingesetzt, die aus
(A) 20 bis 90 Gew.-%, bevorzugt 35 bis 80 Gew.-%, des Bindemittels (A),
(B) 0 bis 60 Gew.-% mindestens eines Pigments und/oder Füllstoffs,
(C) 5 bis 50 Gew.-%, bevorzugt 10 bis 40 Gew.-%, mindestens eines organischen, gegebenenfalls wasserverdünnbaren Lösemittels und
(D) 0 bis 20 Gew.-%, bevorzugt 0,1 bis 10 Gew.-%, mindestens eines Neutralisationsmittels
(E) 0 bis 20 Gew.-%, bevorzugt 2 bis 10 Gew.-%, mindestens eines üblichen Hilfs- und/oder Zusatzstoffes
bestehen, wobei die Summe der Gewichtsanteile der Komponenten (A) bis (E) jeweils 100 Gew.-% beträgt.

### Die Komponente (II)

Es ist erfindungswesentlich, daß die Lackkomponente (II) als Vernetzungsmittel mindestens ein gegebenfalls in einem oder mehreren organischen, gegebenenfalls wasserverdünnbaren Lösemitteln gelöstes oder dispergiertes, vorzugsweise nichtblockiertes Di- und/oder Polyisocyanat (F1) und gegebenenfalls mindestens ein weiteres Vernetzungsmittel, ausgewählt aus mindestens einer Epoxidverbindung (F2) mit mindestens zwei Epoxidgruppen pro Molekül und/oder mindestens einem Aminoplastharz (F3), enthält.

Bei der Polyisocyanatkomponente (F1) handelt es sich um beliebige organische Polyisocyanate mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül und mit Viskositäten von 100 bis 2000 mPas (bei 23°C) eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern und gegebenenfalls die Viskosität des Polyisocyanats auf einen Wert innerhalb der obengenannten Bereiche abzusenken. Als Zusatzmittel geeignete Lösemittel für die Polyisocyanate sind beispielsweise Ethoxyethylpropionat, Butylacetat und ähnliches.

Beispiele für geeignete Isocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Ann. Chem. 562, 75 bis 136, beschrieben. Beispielsweise geeignet sind die bei der Beschreibung der Polyurethanharze (A3) genannten Isocyanate und/oder isocyanatgruppenhaltigen Polyurethanpräpolymere, die durch Reaktion von Polyolen mit einem Überschuß an Polyisocyanaten hergestellt werden können und die bevorzugt niederviskos sind.

Es können auch Isocyanuratgruppen und/oder Biuretgruppen und/oder Allophanatgruppen und/oder Urethangruppen und/oder Harnstoffgruppen und/oder Uretdiongruppen aufweisende Polyisocyanate eingesetzt werden. Urethangruppen aufweisende Polyisocyanate werden beispielsweise durch Umsetzung eines Teils der Isocyanatgruppen mit Polyolen, wie z.B. Trimethylolpropan und Glycerin, erhalten.

Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, 2-Isocyanatopropylcyclohexylisocyanat, Dicyclohexylmethan-2,4'-diisocyanat oder Dicyclohexylmethan-4,4'-diisocyanat oder Mischungen aus diesen Polyisocyanaten eingesetzt. Ganz besonders bevorzugt werden Gemische aus Uretdion- und/oder Isocyanuratgruppen und/oder Allophanatgruppen aufweisenden Polyisocyanaten auf Basis von Hexamethylendiisocyanat, wie sie durch katalytische Oligomerisierung von Hexamethylendiisocyanat unter Verwendung von geeigneten Katalysatoren entstehen, eingesetzt. Die Polyisocyanat-komponente (F1) kann im übrigen auch aus beliebigen Gemischen der beispielhaft genannten Polyisocyanate bestehen.

In einer weiteren Ausführungsform der Erfindung besteht die Polyisocyanatkomponente (F1) aus einem Gemisch aus blockierten Di- und/oder Polyisocyanaten und den schon genannten nichtblockierten Di- und/oder Polyisocyanaten. Dabei machen die blockierten Di- und/oder Polyisocyanate vorzugsweise den geringeren Gewichtsanteil an der Polyisocyanatkomponente (F1) aus. Beispielhaft für Blockierungsmittel für die schon oben angeführten Di- und/oder Polyisocyanate seien genannt: aliphatische, cycloaliphatische oder araliphatische Monoalkohole, wie beispielsweise Methyl-, Butyl-, Octyl-, Laurylalkohol, Cyclohexanol oder Phenylcarbinol, Hydroxylamine, wie Ethanolamin, Oxime, wie Methylethylketonoxim, Acetonoxim oder Cyclohexanonoxim, Amine, wie Dibutylamin oder Diisopropylamin, Malonsäurediester, Acetessigsäureethylester und/oder epsilon-Caprolactam.

Die Polyisocyanatkomponente (F1) wird in den erfindungsgemäßen Beschichtungsmitteln vorteilhafterweise in einer Menge von mindestens 70 Gew.-%, besonders bevorzugt in einer Menge von 80 bis 100 Gew.-%, bezogen auf das Gesamtgewicht des Vernetzungsmittels (F), eingesetzt.

Beispiele für geeignete Polyepoxide (F2) sind alle bekannten aliphatischen und/oder cycloaliphatischen und/oder aromatischen Polyepoxide, beispielsweise auf Basis Bisphenol-A oder Bisphenol-F.
Als Komponente (F2) geeignet sind beispielsweise auch die im Handel unter den Bezeichnungen Epikote® der Firma Shell, Denacol® der Firma Nagase Chemicals Ltd., Japan, erhältlichen Polyepoxide, wie z.B. Denacol EX-411 (Pentaerythritpolyglycidylether), Denacol EX-321 (Trimethylolpropanpolyglycidylether), Denacol EX-512 (Polyglycerolpolyglycidylether) und Denacol EX-521 (Polyglycerolpolyglycidylether).
Die Polyepcxidkomponente (F2) wird in den erfindungsgemäßen Beschichtungsmitteln vorteilhafterweise in einer Menge von 0 bis 30 Gew.-%, besonders bevorzugt in einer Menge von 2 bis 20 Gew.-%, bezogen auf das Gesamtgewicht des Vernetzungsmittels (F), eingesetzt.

Beispiele für geeignete Aminoplastharze (F3) sind iminofunktionelle Melaminharze, wie die im Handel unter dem Namen Cymel® 325 der Firma Cyanamid und Luwipal® LR 8839 der Firma BASF AG erhältlichen Produkte.
Das Aminoplastharz (F3) wird in den erfindungsgemäßen Beschichtungsmitteln vorteilhafterweise in einer Menge von 0 bis 30 Gew.-%, besonders bevorzugt in einer Menge von 2 bis 20 Gew.-%, bezogen auf das Gesamtgewicht des Vernetzungsmittels (F), eingesetzt.

Die Bestandteile (G) und (H) der Lackkomponente (II) entsprechen den Bestandteilen (C) und (E) der Lackkomponente (I).

Bevorzugt werden zur Herstellung der erfindungsgemäßen Beschichtungsmittel Komponenten (II) eingesetzt, die aus
(F) 50 bis 100 Gew.-%, bevorzugt 60 bis 90 Gew.-%, mindestens eines Vernetzungsmittels (F),
(G) 0 bis 50 Gew.-%, bevorzugt 10 bis 40 Gew.-%, mindestens eines organischen, gegebenenfalls wasserverdünnbaren Lösemittels und
(H) 0 bis 20 Gew.-%, bevorzugt 0 bis 10 Gew.-% mindestens eines üblichen Hilfs- und/oder Zusatzstoffes,
bestehen, wobei die Summe der Gewichtsanteile der Komponenten (F) bis (H) jeweils 100 Gew.-% beträgt.

### Die Komponenten (III) und (IV)

Die Bestandteile (L) und (M) der Lackkomponente (III) entsprechen den Bestandteilen (D) und (E) der Lackkomponente (I).

Bevorzugt werden zur Herstellung der erfindungsgemäßen Beschichtungsmittel Komponenten (III) eingesetzt, die aus
(J) 40 bis 90 Gew.-%, bevorzugt 50 bis 85 Gew.-% Wasser,
(K) 5 bis 50 Gew.-%, bevorzugt 10 bis 45 Gew.-% der Komponenten (A1) und/oder (A2) und/oder (A3) und/oder (A4) des Bindemittels (A) in Wasser-dispergierter Form,
(L) 0 bis 20 Gew.-%, bevorzugt 2 bis 10 Gew.-%, mindestens eines Neutralisationsmittels und
(M) 0 bis 20 Gew.-%, bevorzugt 2 bis 10 Gew.-%, mindestens eines üblichen Hilfs- und/oder Zusatzstoffes,
bestehen, wobei die Summe der Gewichtsanteile der Komponenten (J) bis (M) jeweils 100 Gew.-% beträgt.

Die aus der Wasser-dispergierten Form der Komponente (A) und damit der Wasser-dispergierten Form der Komponenten (A1) und/oder (A2) und/oder (A3) und/oder (A4) bestehende Komponente (III) kann einerseits durch Herstellung der Komponenten in organischen Lösemittel, anschließende Neutralisierung der Carboxylgruppen mit dem Neutralisierungsmittel und abschließend Einbringen der neutralisierten Komponenten in deionisiertes Wasser, andererseits durch Emulsionspolymerisation der monomeren Bausteine der Komponenten in Wasser hergestellt werden.

Vorzugsweise werden die Komponenten (A1) und/oder (A2) und/oder (A3) und/oder (A4) zunächst in organischem Lösemittel hergestellt, anschließend neutralisiert und abschließend in neutralisierter Form in Wasser dispergiert.

Bei der Herstellung der Wasser-dispergierten Form der Polyacrylat-Komponente (A1) wird die Polymerisation im organischen Lösemittel vorzugsweise mehrstufig mit seperaten Monomeren- und Initiatorzuläufen durchgeführt. Ganz besonders bevorzugt wird das Polyacrylatharz nach dem schon zuvor beschriebenen Zweistufenverfahren hergestellt, indem
1. ein Gemisch aus (a1), (a2), (a4), (a5) und (a6) oder ein Gemisch aus Teilen der Komponenten (a1), (a2), (a4), (a5) und (a6) in einem organischen Lösemittel polymerisiert wird,
2. nachdem mindestens 60 Gew.-% des aus (a1), (a2), (a4), (a5) und gegebenenfalls (a6) bestehenden Gemisches zugegeben worden sind, (a3) und der gegebenenfalls vorhandene Rest der Komponenten (a1), (a2), (a4), (a5) und (a6) zugegeben werden und weiter polymerisiert wird und
3. nach Beendigung der Polymerisation das erhaltene Polyacrylatharz (A1) gegebenenfalls zumindest teilweise neutralisiert wird.

Beispiele für geeignete Neutralisationsmittel, wie sie in Schritt 3. eingesetzt werden, sind die schon bei der Herstellung der Komponente (I) beschriebenen Ammoniak, Ammoniumsalze und Amine (Bestandteil (D) der Komponente (I)), wobei die Neutralisation in organischer oder in wäßriger Phase erfolgen kann. Die insgesamt zur Neutralisierung der Komponente (A1) eingesetzte Menge an Neutralisationsmittel wird so gewählt, daß 1 bis 100 Äquivalente, bevorzugt 50 bis 90 Äquivalente der Säuregruppen des Bindemittels (Al) neutralisiert werden.

Als Komponente (A2) in Komponente (III) bevorzugt eingesetzt werden Polyester, die nach einem zweistufigen Verfahren hergestellt worden sind, indem zunächst ein hydroxylgruppenhaltiger Polyester mit einer OH-Zahl von 100 bis 300 mg KOH/g, einer Säurezahl von weniger als 10 mg KOH/g und einem zahlenmittleren Molekulargewicht Mn von 500 bis 2000 Dalton hergestellt wird, der dann in einer zweiten Stufe mit Carbonsäureanhydriden zu dem gewünschten Polyester (A2) umgesetzt wird. Die Menge an Carbonsäureanhydriden wird dabei so gewählt, daß der erhaltene Polyester die gewünschte Säurezahl aufweist. Nach Beendigung der Umsetzung wird der Polyester (A2) zumindestens teilweise neutralisiert, wobei wiederum die schon bei der Herstellung der Komponente (I) beschriebenen Neutralisationsmittel (Bestandteil (D) der Komponente (I)) zum Einsatz kommen und wobei die Neutralisation in organischer oder in wäßriger Phase erfolgen kann.

Zur Herstellung der Polyurethanharze (A3) in Komponente (III) wird vorzugsweise zunächst ein Isocyanatgruppen aufweisendes Präpolymer hergestellt, aus dem dann durch weitere Umsetzung, bevorzugt durch Kettenverlängerung, das Polyurethanharz (A3) hergestellt wird.
Nach Beendigung der Polymerisation wird das erhaltene Poylurethanharz zumindest teilweise neutralisiert, wobei als geeignete Neutralisationsmittel wiederum beispielhaft die schon bei der Herstellung der Komponente (I) beschriebenen Ammoniak, Ammoniumsalze und Amine (Komponente (D) der Komponente (I)) zum Einsatz kommen können und wobei die Neutralisation in organischer oder in wäßriger Phase erfolgen kann.

Als gegebenenfalls zusätzlich anwesende Komponente (A4) geeignet sind alle mit den übrigen Bestandteilen der Komponente (III) verträglichen, wasserverdünnbaren und/oder wasserdispergierbaren Bindemittel, beispielsweise acrylierte Polyurethanharze und/oder Polyesteracrylate.

### Die erfindungsgemäßen Beschichtungsmittel

Die Komponenten (I), (II) und (III) werden zur Herstellung der Beschichtungsmittel bevorzugt in solchen Mengen eingesetzt, daß das Aquivalentverhältnis von Hydroxylgruppen der Komponenten (A1) und/oder (A2) und/oder (A3) und/oder (A4) des Bindemittels (A) zu den vernetzenden Gruppen des Vernetzungsmittels (F) zwischen 1 : 2 und 2 : 1 , bevorzugt zwischen 1 : 1,2 und 1 : 1,5, liegt.
Die erfindungsgemäßen Beschichtungsmittel weisen außerdem bevorzugt einen Gesamtgehalt an üblichen Lackadditiven von 0 bis 10 Gew.-%, an organischen Lösemitteln von 5 bis 25 Gew.-%, bevorzugt von 10 bis 20 Gew.-%, an Wasser von 25 bis 60 Gew.-%, bevorzugt von 30 bis 50 Gew.-%, an Bindemittel (A) von 15 bis 60 Gew.-%, bevorzugt von 20 bis 50 Gew.-%, an Vernetzungsmittel (F) von 5 bis 30 Gew.-%, bevorzugt von 10 bis 20 Gew.-%, sowie an Pigmenten und/oder Füllstoffen von 0 bis 50 Gew.-%, bevorzugt von 0 bis 30 Gew.-%, auf, jeweils bezogen auf das Gesamtgewicht des Beschichtungsmittels.

Die Herstellung der Komponente (I) erfolgt nach dem Fachmann bekannten Methoden durch Mischen und gegebenenfalls Dispergieren der einzelnen Bestandteile. So erfolgt beispielsweise die Einarbeitung von farbgebenden Pigmenten üblicherweise durch Anreiben (Dispergieren) der jeweiligen Pigmente in einem oder mehreren Bindemitteln. Das Anreiben der Pigmente erfolgt mit Hilfe üblicher Vorrichtungen, wie beispielsweise Perlmühlen und Sandmühlen.

Die Herstellung der Komponenten (II), (III) und gegebenenfalls (IV) erfolgt ebenfalls nach dem Fachmann gut bekannten Methoden durch Mischen bzw. Dispergieren der einzelnen Bestandteile.

Die erfindungsgemäßen Beschichtungsmittel werden durch folgendes Mischverfahren aus den Komponenten (I), (II), (III) und gegebenenfalls (IV) hergestellt:
Zur Herstellung der erfindungsgemäßen Beschichtungsmittel werden zunächst die Komponenten (I) und (II) gemischt, wobei bevorzugt diese Komponenten (I) und (II) kein Neutralisationsmittel enthalten. Dann wird zu dieser Mischung gegebenenfalls die Komponente (IV) zugesetzt. Entweder wird dann die so erhaltene Mischung in die Neutralisationsmittel enthaltende Komponente (III) gegeben und das erhaltene Beschichtungsmittel dispergiert, oder es wird dann in die so erhaltene Mischung die Neutralisationsmittel enthaltende Komponente (III) gegeben.

Ferner kann das erfindungsgemäße Beschichtungsmittel beispielsweise analog zu dem gerade beschriebenen Verfahren hergestellt werden, wobei allerdings das Neutralisationsmittel nicht in der Komponente (III) enthalten ist, sondern vor der Zugabe der Komponente (III) separat zugegeben wird.

Außerdem kann das erfindungsgemäße Beschichtungsmittel auch dadurch hergestellt werden, daß die Komponente (I) zunächst mit dem Neutralisationsmittel versetzt wird. Selbstverständlich kann anstelle dieses Mischens auch eine Komponente (I) eingesetzt werden, die bereits das Neutralisationsmittel enthält. Die so erhaltene Komponente(I) wird dann mit der Komponente (II) und gegebenenfalls der Komponente (IV) gemischt (gleichzeitig oder aufeinanderfolgende Mischung mit (II) und gegebenenfalls (IV)), die so erhaltene Mischung wird dann entweder zu der Komponente (III) gegeben oder mit der Komponente (III) versetzt, und das so jeweils erhaltene Beschichtungsmittel wird noch durch Dispergieren homogenisiert.

Die erfindungsgemäßen Beschichtungsmittel können durch übliche Applikationsmethoden, wie z.B. Spritzen, Rakeln, Streichen, Tauchen, auf beliebige Substrate, wie z.B. Metall, Holz, Kunststoff oder Papier, aufgebracht werden.

Die erfindungsgemäßen Beschichtungsmittel werden üblicherweise bei Temperaturen von unter 120 Grad C, bevorzugt bei Temperaturen von maximal 80 Grad C, gehärtet. In speziellen Anwendungsformen der erfindungsgemäßen Beschichtungsmittel können auch höhere Härttemperaturen angewendet werden.

Die erfindungsgemäßen Beschichtungsmittel werden vorzugsweise zur Herstellung von Decklackierungen eingesetzt. Die erfindungsgemäßen Beschichtungsmittel können sowohl bei der Serien- als auch bei der Reparaturlackierung von Automobilkarosserien eingesetzt werden. Sie werden vorzugsweise aber im Bereich der Reparaturlackierung und der Lackierung von Kunststoffteilen eingesetzt.

Die erfindungsgemäßen wäßrigen Beschichtungsmittel können als Füller sowie zur Herstellung einschichtiger Decklackierungen sowie als pigmentierte Basislacke oder als Klarlacke in einem Verfahren zur Herstellung einer mehrschichtigen Lackierung eingesetzt werden (Base coat- /Clear coat-Verfahren).

Die Erfindung wird nun anhand von Ausführungsbeispielen näher erläutert. Alle Angaben über Teile und Prozente sind dabei Gewichtsangaben, falls nicht ausdrücklich etwas anderes festgestellt wird.

### Beispiele

### Beispiel 1: Herstellung und Applikation eines Klarlacks

### Beispiel 1.1: Herstellung eines wasserverdünnbaren Acrylatharzes (A1) für die Komponente (I)

In einem 41-Stahlkessel, ausgestattet mit Monomerzulauf, Initiatorzulauf, Thermometer, ölheizung und Rückflußkühler werden 1000 g Ethylethoxypropionat vorgelegt und auf 130 Grad C aufgeheizt. Dann wird eine Lösung von 89,4 g tert.-Butylperoxyethylhexanoat in 145,7 g Ethoxyethylpropionat in einer solchen Geschwindigkeit zugegeben, daß die Zugabe nach 4,5 Stunden abgeschlossen ist. 5 Minuten nach Beginn der Zugabe der tert.-Butylperoxyethylhexanoatlösung wird auch mit der Zugabe der Monomermischung aus (a1), (a2) und (a6):

| | |
|---|---|
| (a1) | 285 g n-Butylmethacrylat |
| | 229 g Methylmethacrylat, |
| | 640 g Laurylmethacrylat (Handelsprodukt Methacrylester 13 der Firma Röhm GmbH, Darmstadt), |
| | |
| (a2) | 270 g Hydroxyethylacrylat und |
| | |
| (a6) | 238 g Styrol |

begonnen, wobei die Gesamtzulaufzeit für den ersten Monomerenzulauf 4 Stunden beträgt.

2,5 Stunden nachdem der erste Monomerenzulauf gestartet worden ist, wird ein zweiter Monomerenzulauf gestartet, der aus einem Gemisch aus (a2), (a3) und 27 g Ethoxypropionat besteht:

| | |
|---|---|
| (a2) | 112 g Hydroxyethylacrylat und |
| | |
| (a3) | 54 g Acrylsäure, |

wobei die Gesamtzulaufzeit für den zweiten Monomerenzulauf bei 1,5 Stunden liegt.

Die Mischung (a1), (a2), (a3) und (a6) wird in einer solchen Geschwindigkeit zugegeben, daß die Zugabe nach 4 Stunden abgeschlossen ist. Nach Abschluß der Zugabe der tert.-Butylperoxyethylhexanoatlösung wird die Reaktionsmischung noch 2 h bei 120 Grad C gehalten. Das Reaktionsgemisch wird durch Abdestillieren des organischen Lösemittels (während 1 Stunde bei 130 Grad C im Vakuum) auf einen Festkörpergehalt von 79,2 % eingestellt. Das so erhaltene Acrylatharz weist eine OH-Zahl von 140 mg KOH/g Festharz, eine Säurezahl von 31,1 mg KOH/g Festharz, ein zahlenmittleres Molekulargewicht Mn von 3220 Dalton und ein gewichtmittleres Molekulargewicht Mw von 7505 Dalton auf. Die Viskosität einer 55%igen Lösung des Acrylatharzes in Ethoxyethylpropionat beträgt 4,4 dPa·s (23°C).

### Beispiel 1.2: Herstellung der Dispersion eines Polyurethanharzes (A3) für die Komponente (III)

### 1.2.1. Herstellung der Polyestervorstufe

In einem für die Polykondensationsreaktionen geeigneten 41-Stahlreaktor werden 1088 g Hydroxypivalinsäureneopentylglykolester, 120 g Phthalsäureanhydrid, 1268 g Isophthalsäure, 21 g 2-Butyl-2-ethylpropandiol, 489 g Neopentylglykol und 113 g Xylol als Schleppmittel eingewogen.

Anschließend wird aufgeheizt und das Kondensationswasser kontinulierlich bis zu einer Säurezahl von < 3,5 entfernt. Der Ansatz wurde auf etwa 100°C abgekühlt und mit Ethylethoxypropionat auf 79,7 % Festkörpergehalt eingestellt. Das resultierende Polyesterdiol weist eine Säurezahl von 4,4 mg KOH/g auf. Die Viskosität einer 60 %igen Lösung des Polyesterdiols in Ethoxiethylpropionat beträgt bei 23 Grad C 3,6 dPa.s.

### 1.2.2. Herstellung der Polyurethandispersion

In einem für die Polyurethanharzsynthese geeigneten 41-Stahlreaktor werden 749 g des Polyesterdiols gemäß Beispiel 2, 6,6 g 2-Butyl-2-ethylpropandiol, 69 g Dimethylolpropionsäure und 318 g m-Tetramethylxylylendiisocyanat vorgelegt und bei 110 Grad C bis zu einem konstanten Diisocyanatgehalt umgesetzt. Dann werden 101 g Trimethylolpropan zugesetzt und bis zur Beendigung der Reaktion weiter erhitzt. Anschließend werden 31,5 g Ethylethoxypropionat hinzugefügt.
Nach weiteren 30 Minuten Rühren der Reaktionsmischung wird mit 36,7 g Dimethylethanolamin neutralisiert. Die Reaktionsmischung, die noch eine Temperatur von 90 bis 110 Grad C aufweist, wird danach in 1929,2 g Wasser, das eine Temperatur von 60 Grad C aufweist, dispergiert.
Die resultierende Polyurethandispersion ist frei von Gelteilchen, weist einen Festkörpergehalt von 36,1 %, eine Säurezahl von 30,3 mg KOH/g sowie einen pH-Wert von 7,1 auf. Bei einer Temperatur von 40 Grad C ist die Polyurethandispersion länger als 4 Wochen lagerstabil.

### Beispiel 1.3: Herstellung der Dispersion eines Polyacrylatharzes (Al) für die Komponente (III)

In einem 41-Stahlreaktor mit Rührer, Rückflußkühler, zwei Monmerenzuläufen und einem Initiatorzulauf werden 385 g n-Butanol vorgelegt und auf 110 Grad C aufgeheizt. Innerhalb von 5 Stunden wird dann eine Monomermischung aus (a1), (a2) und (a6):

| | |
|---|---|
| (a1) | 255 g n-Butylmethacrylat, |
| | 197 g Methylmethacrylat, |
| | 113 g Laurylmethacrylat (Handelsprodukt Methacrylester 13 der Firma Röhm GmbH, Darmstadt), |
| | |
| (a2) | 215 g Hydroxyethylacrylat und |
| | |
| (a6) | 181 g Styrol |

zudosiert.
Gleichzeitig beginnend wird während 5,5 Stunden eine Mischung aus 68 g tert.-Butylperoxyhexanoat in 159 g n-Butanol zudosiert.

3,5 Stunden nachdem der erste Monomerenzulauf gestartet worden ist, wird ein zweiter Monomerenzulauf gestartet, der aus einem Gemisch aus(a2) und (a3) besteht:

| | |
|---|---|
| (a2) | 113 g Hydroxyethylmethacrylat und |
| | |
| (a3) | 58 g Acrylsäure, |

der nach 1,5 Stunden abgeschlossen wird.

Nach der Neutralisation der Reaktionsmischung mit 63 g Dimethylethanolamin und der Zugabe von 38 g Ethylethoxypropionat wird 30 Minuten gerührt.
Danach werden 1338 g deionisiertes Wasser zugefügt und das organische Lösemittel im Vakuum bis auf einen Restgehalt von < 1,5 Gew.-% abdestilliert.
Nach Einstellung des Festkörpergehalts auf 39,9 % wird die Dispersion charkterisiert. Das zahlenmittlere Molekulargewicht Mn des Polyacrylats beträgt 5017 Dalton, das gewichtsmittlere Molekulargewicht Mw 14337 Dalton. Die Säurezahl der Polyacrylatdispersion beträgt 41,4 mg KOH/g und der pH-Wert 7,2. Die Polyacrylatdispersion ist bei 40 Grad C länger als 4 Wochen lagerstabil.

### Beispiel 1.4: Herstellung der Lackomponenten (I), (II) und (III)

### 1.4.1. Herstellung der Komponente (I)

Aus den im folgenden angegebenen Bestandteilen wird durch Mischen mittels eines Rührers (600 Umdrehungen pro Minute) die Komponente (I) hergestellt:

| | |
|---|---|
| 14,0 Gew.-Teile | organisches wasserverdünnbares Acrylatharz (A1) gemäß Beispiel 1.1, |
| | |
| 3,6 Gew.-Teile | Butylglykolacetat, |
| | |
| 3,0 Gew.-Teile | Butylglykol, |
| | |
| 1,0 Gew.-Teile | Benetzungsmittel (Tensid S, Firma Biesterfeld), |
| | |
| 0,2 Gew.-Teile | Verlaufsmittel auf Basis eines polyethermodifizierten Dimethylsiloxan-Copolymerisats (Byk® 331 der Firma Byk Gulden) und |
| | |
| 0,6 Gew.-Teile | Verlaufsmittel (Fluorat® FC 430 der Firma 3M) |

### 1.4.2. Herstellung der Komponente (II)

Aus den im folgenden angegebenen Bestandteilen wird durch Mischen mittels eines Rührers (600 Umdrehungen pro Minute) die Komponente (II) hergestellt:

| | |
|---|---|
| 2,9 Gew.-Teile | Polyisocyanat auf Basis Hexamethylendiisocyanat-Allophanat (Desmodur® VPLS 2102 der Firma Bayer AG), |
| | |
| 10,7 Gew.-Teile | Polyisocyanat auf Basis Hexamethylendiisocyanat-Trimerisat (Tolonate® HDTLV der Firma Rhone-Poulenc) und |
| | |
| 1,6 Gew.-Teile | Ethylethoxypropionat. |

### 1.4.3. Herstellung der Komponente (III)

Aus den im folgenden angegebenen Bestandteilen wird durch Mischen mittels eines Rührers (600 Umdrehungen pro Minute) die Komponente (III) hergestellt:

| | |
|---|---|
| 29,0 Gew.-Teile | deionisiertes Wasser, |
| | |
| 0,45 Gew.-Teile | Dimethylethanolamin, |
| | |
| 1,9 Gew.-Teile | Verdickungsmittel auf Polyurethan-Basis (Dapral® T210 der Firma Akzo), |
| | |
| 8,9 Gew.-Teile | Polyacrylatdispersion (A1) gemäß Beispiel 1.3 mit 38 % Feststoffgehalt und |
| | |
| 17,5 Gew.-Teile | Polyurethandispersion (A3) gemäß Beispiel 1.2 mit 36 % Feststoffgehalt. |

### Beispiel 1.5: Herstellung des erfindungsgemäßen Klarlacks

Die Herstellung des erfindungsgemäßen Klarlacks erfolgt durch Mischen der Komponenten (I), (II) und(III) mittels eines Rührers (600 Umdrehungen pro Minute), indem die Komponente (II) in die Komponente (I) eingerührt wird und die resultierende Mischung in die Komponente (III) eingerührt wird.

### Vergleichsbeispiel 1: Herstellung des Klarlacks nach einem anderen Mischverfahren

Die Herstellung des Klarlacks des Vergleichsbeispiels 1 erfolgt durch Mischen der Komponenten (I), (II) und (III) mittels eines Rührers (600 Umdrehungen pro Minute), indem die Komponente (I) in die Komponente (III) eingerührt wird und die Komponente (II) danach in die 5 Mischung aus (I) und (III) eingerührt wird.

### Vergleichsbeispiel 2: Herstellung des Klarlacks nach einem anderen Mischverfahren

Die Herstellung des Klarlacks des Vergleichsbeispiels 2 erfolgt durch Mischen der Komponenten (I), (II) und (III) mittels eines Rührers (600 Umdrehungen pro Minute), indem die Komponente (III) in die Komponente (I) eingerührt wird und die Komponente (II) danach in die Mischung aus (I) und (III) eingerührt wird.

### Beispiel 1.6: Applikation der Klarlacke gemäß Beispiel 1.5 und gemäß Vergleichsbeispielen 1 und 2 und Prüfung der eingebrannten Lackfilme

Auf ein mit einer handelsüblichen Elektrotauchlackierung und einem handelsüblichen Füller beschichtetes phosphatiertes Stahlblech wird eine wasserverdünnbare, mit Aluminiumplättchen pigmentierte Basisbeschichtungszusammensetzung gemäß EP-A-279 813 so appliziert, daß eine Trockenfilmschichtdicke von 12 bis 15 µm erhalten wird. Die applizierte Basisbeschichtungszusammensetzung wird 10 Min. bei Raumtemperatur und 10 Min. bei 60°C getrocknet. Dann werden die Deckbeschichtungszusammensetzungen gemäß Beispiel 5 und den Vergleichbeispielen 1 bis 3 in 3 Spritzgängen mit 15 Min. Zwischenablüftzeit auf die Basisschicht gespritzt. Schließlich wird 60 Min. bei Raumtemperatur getrocknet und 30 Min. bei 60°C im Umluftofen eingebrannt. Die so erhaltenen mehrschichtigen Überzüge wurden mehreren Prüfungen unterzogen, deren Ergebnisse in Tabelle 1 dargestellt sind.

**Tabelle 1:**

| Eigenschaften der gemäß Beispiel 6 hergestellten Beschichtungen: | | | |
|---|---|---|---|
| Beschichtung gemäß | | | |
| | Beispiel | Vergleichsbeipiele | |
| | 5 | 1 | 2 |
| | | | |
| Glanzgrad¹⁾ bei 20 Grad | 87 | 78 | 78 |
| | | | |
| Schichtdicke (Mikrometer) | 50 | 61 | 60 |
| | | | |
| Optik (visuell) | Klar | Trüb | Glanzschleier |
| | | | |
| Verlauf (visuell) | sehr gut | sehr schlecht | schlecht |

| | | | |
|---|---|---|---|
| 1) Bestimmung des Glanzgrads nach DIN 67 530 | | | |

### Beispiel 2: Herstellung eines pigmentierten Decklacks

### Beispiel 2.1: Herstellung der pigmentierten Komponente (I)

### 2.1.1. Herstellung des organisch gelösten Polyurethanharzes (A3) für die Komponente (I)

### Herstellung der Polyestervorstufe:

In einem für Polykondensationsreaktionen geeigneten 41-Sathlreaktor werden 459,4 g einer Dimerfettsäure mit dem Handelsnamen Pripol® 1013, 133,9 g Cyclohexandimethanol, 896,5 g Hydroxypivalinsäureneopentylglykolester, 21,3 g Butylethylpropandiol, 486,7 g Neopentylglykol 1262,4 g Isophthalsäure sowie 83,2 g Cyclohexan als Schleppmittel eingewogen.
Anschließend wird aufgeheizt und das Kondensationswasser kontinuierlich bis zu einer Säurezahl < 4,5 entfernt. Der Ansatz wird auf etwa 100 Grad C abgekühlt und mit Ethylethoxylpropionat auf 79,7 % Festkörpergehalt eingestellt. Das resultierende Polyesterdiol weist ein zahlenmittleres Molekulargewicht Mn von 2374 Dalton und ein gewichtsmittleres Molekulargewicht Mw von 4606 Dalton (gemessen mit GPC gegen Polystyrol-Standard), eine Farbzahl nach Gardner von weniger als 4 sowie eine Säurezahl von 4,4 mg KOH/g auf. Die Viskosität einer 60 %igen Lösung des Polyesterdiols in Ethylethoxypropionat beträgt bei 23 Grad C 3,3 dPas.

Herstellung des organisch gelösten Polyurethanharzes (A3):

In einem für die Polyurethanharzsynthese geeigneten 41-Stahlreaktor werden 1860,0 g der Polyesterdiolvorstufe, 131,2 g Dimethylolpropionsäure, 26,7 g Butylethylpropandiol und 608,0 g m-Tetramethylxylylendiisocyanat vorgelegt und bei 115 Grad C bis zu einem konstanten Diisocyanatgehalt umgesetzt. Bei einem Isocyanatgehalt von 1,3 % werden 120,8 g Trimethylolpropan zugesetzt und bis zur Beendigung der Reaktion weiter erhitzt. Anschließend werden 1028,8 g Isopropoxypropanol zugegeben.
Nach weiteren 30 Minuten Rühren der Reaktionsmischung wird mit 69,6 g N,N-Dimethylethanolamin neutralisiert und abgekühlt. Abschließend wird mit Isopropoxypropanol auf einen Festkörpergehalt von 60 % eingestellt.
Das resultierende Polyurethanharz in organischer Lösung weist eine Säurezahl von 24,8 mg KOH/g und eine Viskosität in Ethoxyethylpropionat bei 23 Grad C von 6,2 dPas auf Das zahlenmittlere Molekulargewicht Mn des Polyurethanharzes beträgt 2529 Dalton, das gewichtsmittlere Molekulargewicht Mw 13466 (gemessen mit GPC gegen Polystyrol-Standard).

### 2.1.2. Herstellung der pigmentierten Komponente (I)

12 Gew.-Teile Paliogenblau, 50 Teile der 60 %igen, neutralisierten Polyurethanharzlösung gemäß Beispiel 2.1.1., 23 Gew.-Teile Butylglykol und 15 gew.-Teile iso-Butanol werden unter Rühren vermischt und mit einer Sandmühle dispergiert.

### 2.2. Herstellung der Dispersion eines Polyacrylatharzes (A1) für die Komponente (III)

In einem 41-Stahlreaktor mit Rührer, Rückflußkühler, zwei Monomerenzuläufen und einem Initiatorzulauf werden 470 g n-Butanol vorgelegt und auf 110 Grad C aufgeheizt. Innerhalb von 5 Stunden wird dann eine Monomermischung aus (a1), (a2) und (a6):

| | |
|---|---|
| (a1) | 240 g n-Butylmethacrylat, |
| | 209 g Methylmethacrylat, |
| | 120 g Laurylmethacrylat (Handelsprodukt Methacrylester 13 der Firma Röhm GmbH, Darmstadt), |
| | |
| (a2) | 270 g Hydroxyethylmethacrylat und |
| | |
| (a6) | 180 g Styrol |

zudosiert.
Gleichzeitig beginnend wird während 5,5 Stunden eine Mischung aus 36,0 g tert.-Butylperoxyethylhexanoat in 92,4 g n-Butanol zudosiert.

3,5 Stunden nachdem der erste Monomerenzulauf gestartet worden ist, wird ein zweiter Monomerenzulauf gestartet, der aus einem Gemisch aus (a2) und (a3) besteht:

| | |
|---|---|
| (a2) | 120 g Hydroxyethylmethacrylat und |
| | |
| (a3) | 61 g Acrylsäure, |

der nach 1,5 Stunden abgeschlossen ist.

Nach der Neutralisation der Reaktionsmischung mit 63 g Dimethylethanolamin wird 30 Minuten gerührt. Danach werden 1379 g deionisiertes Wasser zugefügt und das organische Lösemittel im Vakuum bis auf einen Restgehalt von < 1,5 Gew.-% abdestilliert.
Nach Einstellung des Festkörpergehalt auf 38,9 % wird die Dispersion charakterisiert. Die Säurezahl der Polyacrylatdispersion beträgt 37,2 mg KOH/g und der pH-Wert 7,4. Die Polyacrylatdispersion ist bei 40 Grad C länger als 4 Wochen lagerstabil.

### Beispiel 2.3: Herstellung des applikationsfähigen Decklacks

41,4 Gew.-Teile der pigmentierten Komponente (I) gemäß Beispiel 2.1 werden mit einer Mischung aus 19 Gew.-Teilen eines niedrigviskosen Isophorondiisocyanat-Trimerisats und 7,5 Gew.-Teilen eines Hexamethylendiisocyanat-Trimerists (Desmodur® VPLS 2102) als Komponente (II) gut vermischt.
Die komplette Vormischung aus den Komponenten (I) und (II) wird in 66,1 Gew.-Teilen einer Mischung aus:

| | |
|---|---|
| 4,5 Gew.-Teilen | Ethylethoxypropionat, |
| 4,5 Gew.-Teilen | Dipropylenglykolmonbutylether, |
| 0,2 Gew.-Teilen | Verlaufshilfsmittel (Byk® 325 der Firma Byk Gulden), |
| 0,2 Gew.-Teilen | Slipadditiv (Tegoglide® 410 der Firma Goldschmidt AG), |
| 0,8 Gew.-Teilen | Lösemittel (Solvesso® 200), |
| 0,4 Gew.-Teilen | Butylglykol, |
| 31,5 Gew.-Teilen | der Polyacrylatdispersion (A1) gemäß Beispiel 2.2 und |
| 24,0 Gew.-Teilen | deionisiertes Wasser |

gegeben.
Zu dieser Mischung werden abschließend 15 Gew.-Teile deionisiertes Wasser gegeben.

## Patentansprüche

1. Aus mindestens drei Komponenten bestehendes Beschichtungsmittel auf der Basis eines in einem oder mehreren organischen Lösemitteln gelösten oder dispergierten, Hydroxylgruppen und Säuregruppen, die in die entsprechenden Säureaniongruppen überführbar sind, enthaltenden Polymers und eines isocyanatgruppenhaltigen Vernetzungsmittels, dadurch gekennzeichnet, daß
1.) die Komponente (I) als Bindemittel (A)
(A1) mindestens ein in einem oder mehreren organischen, gegebenenfalls wasserverdünnbaren Lösemitteln gelöstes oder dispergiertes, Hydroxylgruppen und Säuregruppen, die in die entsprechenden Säureaniongruppen überführbar sind, enthaltendes Acrylatcopolymerisat (A1) mit einem zahlenmittleren Molekulargewicht Mn zwischen 1000 und 30.000 Dalton, einer OH-Zahl von 40 bis 200 mgKOH/g und einer Säurezahl von 5 bis 150 mgKOH/g und/oder
(A2) mindestens ein in einem oder mehreren organischen, gegebenenfalls wasserverdünnbaren Lösemitteln gelöstes oder dispergiertes, Hydroxylgruppen und Säuregruppen, die in die entsprechenden Säureaniongruppen überführbar sind, enthaltendes Polyesterharz (A2) mit einem zahlenmittleren Molekulargewicht Mn zwischen 1000 und 30.000 Dalton, einer OH-Zahl von 30 bis 250 mgKOH/g und einer Säurezahl von 5 bis 150 mgKOH/g und/oder
(A3) mindestens ein in einem oder mehreren organischen, gegebenenfalls wasserverdünnbaren Lösemitteln gelöstes oder dispergiertes, Hydroxylgruppen und Säuregruppen, die in die entsprechenden Säureaniongruppen überführbar sind, enthaltendes Polyurethanharz (A3) mit einem zahlenmittleren Molekulargewicht Mn zwischen 1000 und 30.000 Dalton, einer OH-Zahl von 20 bis 200 mgKOH/g und einer Säurezahl von 5 bis 150 mgKOH/g und
(A4) gegebenenfalls mindestens ein mit den übrigen Bestandteilen der Komponente (I) verträgliches wasserverdünnbares Bindemittel aus der Gruppe der acrylierten Polyurethanharze und/oder Polyesteracrylate
enthält, wobei die Bindemittelkomponenten (A1), (A2), (A3) und gegebenfalls (A4) so ausgewählt werden, daß eine 50 %ige Lösung des Bindemittels (A) in Ethoxyethylpropionat bei 23 Grad C eine Viskosität von <= 6,0 dPa.s aufweist,
2.) die Komponente (II) als Vernetzungsmittel (F) mindestens ein in einem oder mehreren organischen Lösemitteln gelöstes oder dispergiertes Di- und/oder Polyisocyanat (F1) und gegebenenfalls mindestens ein weiteres Vernetzungsmittel, bestehend aus mindestens einer Epoxidverbindung (F2) mit mindestens zwei Epoxidgruppen pro Molekül und/oder mindestens einem Aminoplastharz (F3), enthält und
3.) die Komponente (III) die Komponenten (A1) und/oder (A2) und/oder (A3) und/oder (A4) in wäßriger Dispersion enthält.

2. Beschichtungsmittel nach Anspruch 1, dadurch gekennzeichnet, daß
1.) als Komponente (A1) Acrylatcopolymerisate eingesetzt werden, die als 50 %ige Lösung in Ethoxyethylpropionat bei 23 Grad C eine Viskosität <= 6,0 dPa.s aufweisen und/oder
2.) als Komponente (A2) Polyesterharze eingesetzt werden, die als 50 %ige Lösung in Ethoxyethylpropionat bei 23 Grad C eine Viskosität <= 6,0 dPa.s und/oder
3.) als Komponente (A3) Polyurethanharze eingesetzt werden, die als 50 %ige Lösung in Ethoxyethylpropionat bei 23 Grad C eine Viskosität <= 6,0 dPa.s und/oder
4.) daß die Bindemittel (A1) und/oder (A2) und/oder (A3) und/oder (A4) so ausgewählt werden, daß eine 50 %ige Lösung des Bindemittels (A) im Ethoxyethylpropionat bei 23 Grad C eine Viskosität von ≤ 6,0 dPa·s aufweist.

3. Beschichtungsmittel nach Anspruch 1 oder 2, dadurch gekennzeichnet, daß die Komponente (I) als Bindemittel (A) mindestens 20 Gew.-% (Al), 0 bis 30 Gew.-% (A2), 0 bis 80 Gew.-% (A3) und 0 bis 10 Gew.-% (A4) enthält, wobei die Summe der Gewichtsanteile der Komponenten (A1) bis (A4) jeweils 100 Gew.-%, bezogen auf das Bindemittel (A) beträgt.

4. Beschichtungsmittel nach einem der Ansprüche 1 bis 3, dadurch gekennzeichnet, daß (A1) erhältlich ist, indem in einem organischen Lösemittel oder einem Lösemittelgemisch und in Gegenwart mindestens eines Polymerisationsinitiators
a1) ein von (a2), (a3), (a4), (a5) und (a6) verschiedener, mit (a2), (a3), (a4), (a5) und (a6) copolymerisierbarer, säuregruppenfreier (Meth)acrylsäureester oder ein Gemisch aus solchen Monomeren,
a2) ein mit (a1), (a2), (a3), (a4), (a5) und (a6) copolymerisierbares, von (a5) verschiedenes, ethylenisch ungesättigtes Monomer, das mindestens eine Hydroxylgruppe pro Molekül trägt und säuregruppenfrei ist, oder ein Gemisch aus solchen Monomeren,
a3) ein mindestens eine Säuregruppe pro Molekül tragendes, mit (a1), (a2), (a4), (a5) und (a6) copolymerisierbares, ethylenisch ungesättigten Monomer oder ein Gemisch aus solchen Monomeren und
a4) gegebenenfalls ein oder mehrere Vinylester, von in alpha-Stellung verzweigten Monocarbonsäuren mit 5 bis 18 C-Atomen je Molekül,
a5) gegebenenfalls mindestens ein Umsetzungsprodukt aus Acrylsäure und/oder Methacrylsäure mit dem Glycidylester einer in alpha-Stellung verzweigten Monocarbonsäure mit 5 bis 18 C-Atomen je Molekül oder anstelle des Umsetzungsproduktes eine äquivalente Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül umgesetzt wird und
a6) gegebenenfalls ein mit (a1), (a2), (a3), (a4), und (a5) copolymerisierbares, von (a1), (a2), (a4) und (a5) verschiedenes, säuregruppenfreies, ethylenisch ungesättigtes Monomer oder ein Gemisch aus solchen Monomeren
polymerisiert werden, wobei (a1), (a2), (a3), (a4), (a5) und (a6) in Art und Menge so ausgewählt werden, daß das Polyacrylatharz (A1) die gewünschte OH-Zahl, Säurezahl und das gewünschte Molekulargewicht aufweist.

5. Beschichtungsmittel nach einem der Ansprüche 1 bis 4, dadurch gekennzeichnet, daß das Polyesterharz (A2) erhältlich ist durch Umsetzung von
p1) Polycarbonsäuren oder deren veresterungsfähigen Derivaten, gegebenenfalls zusammen mit Monocarbonsäuren,
p2) Polyolen, gegebenenfalls zusammen mit Monoolen,
p3) gegebenenfalls weiteren modifizierenden Komponenten und
p4) gegebenenfalls einer mit dem Reaktionsprodukt aus (p1), (p2) und gegebenenfalls (p3) reaktionsfähigen Komponente.

6. Beschichtungsmittel nach einem der Ansprüche 1 bis 5, dadurch gekennzeichnet, daß das Polyurethanharz (A3) erhältlich ist, indem eine Alkoholkomponente eingesetzt wird, die zumindest zu einem gewissen Anteil aus
a₁) mindestens einem Diol der Formel (I') 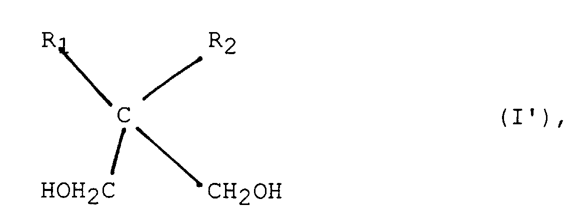 in der R₁ und R₂ jeweils einen gleichen oder verschiedenen Rest darstellen und für einen Alkylrest mit 1 bis 18 C-Atomen, einen Arylrest oder einen cycloaliphatischen Rest stehen, mit der Maßgabe, daß R₁ und/oder R₂ nicht Methyl sein darf, und/oder
a₂) mindestens einem Diol der Formel (II') 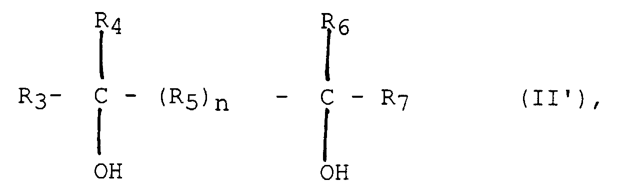 in der R₃, R₄, R₆ und R₇ jeweils gleiche oder verschiedene Reste darstellen und für einen Alkylrest mit 1 bis 6 C-Atomen, einen Cycloalkylrest oder einen Arylrest stehen und R₅ einen Alkylrest mit 1 bis 6 C-Atomen, einen Arylrest oder einen ungesättigten Alkylrest mit 1 bis 6 C-Atomen darstellt, und n entweder 0 oder 1 ist,
besteht und/oder indem Diisocyanate der allgemeinen Formel (III') eingesetzt werden: 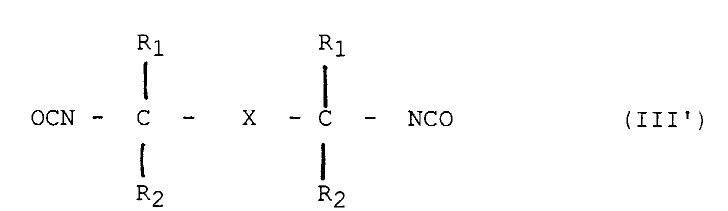 wobei X für einen zweiwertigen, aromatischen Kohlenwasserstoffrest, vorzugsweise für einen gegebenenfalls Halogen-, Methyl- oder Methoxy-substituierten Naphthylen-, Diphenylen- oder 1,2-, 1,3- oder 1,4-Phenylenrest, besonders bevorzugt für einen 1,3-Phenylenrest und R₁ und R₂ für einen Alkylrest mit 1 bis 4 C-Atomen, bevorzugt für einen Methylrest, stehen,
und/oder indem Diisocyanate der allgemeinen Formel (IV') eingesetzt werden: 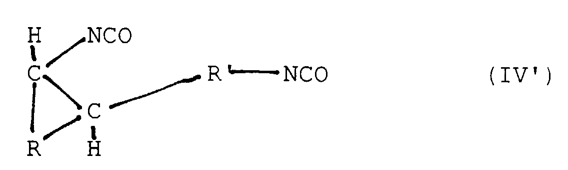 mit:
R für einen zweiwertigen Alkyl- oder Aralkylrest mit 3 bis 20 Kohlenstoffatomen und
R' für einen zweiwertigen Alkyl- oder Aralkylrest mit 1 bis 20 Kohlenstoffatomen.

7. Beschichtungsmittel nach einem der Ansprüche 1 bis 6, dadurch gekennzeichnet, daß die Komponente (II) als Vernetzungsmittel
(F1) mindestens 70 Gew.-%, bevorzugt 80 bis 100 Gew.-% eines unblockierten Di- und/oder Polyisocyanates (F1) und/oder eines Gemischs aus blockiertem und unblockiertem Di- und/oder Polyisocyanat,
(F2) 0 bis 30 Gew.-%, bevorzugt 2 bis 20 Gew.-%, mindestens einer Epoxidverbindung (F2) mit mindestens 2 Epoxidgruppen pro Molekül und
(F3) 0 bis 30 Gew.-%, bevorzugt 2 bis 20 Gew.-%, mindestens eines Aminoplastharzes (F3)
enthält, jeweils bezogen auf das Gesamtgewicht des Vernetzungsmittels (F).

8. Beschichtungsmttel nach einem der Ansprüche 1 bis 7, dadurch gekennzeichnet, daß die Komponente (I) aus
(A) 20 bis 90 Gew.-%, bevorzugt 35 bis 80 Gew.-%, des Bindemittels (A),
(B) 0 bis 60 Gew.-%, bevorzugt 5 bis 50 Gew.-% mindestens eines Pigments und/oder Füllstoffs,
(C) 5 bis 50 Gew.-%, bevorzugt 10 bis 40 Gew.-%, mindestens eines organischen, gegebenenfalls wasserverdünnbaren Lösemittels und
(D) 0 bis 20 Gew.-%, bevorzugt 2 bis 10 Gew.-%, mindestens eines Neutralisationsmittels
(E) 0 bis 20 Gew.-%, bevorzugt 2 bis 10 Gew.-%, mindestens eines üblichen Hilfs- und/oder Zusatzstoffes
besteht, wobei die Summe der Gewichtsanteile der Komponenten (A) bis (E) jeweils 100 Gew.-% beträgt, und die Komponente (II) aus
(F) 50 bis 100 Gew.-%, bevorzugt 60 bis 90 Gew.-%, mindestens eines Vernetzungsmittels (F),
(G) 0 bis 50 Gew.-%, bevorzugt 10 bis 40 Gew.-%, mindestens eines organischen, gegebenenfalls wasserverdünnbaren Lösemittels und
(H) 0 bis 20 Gew.-%, bevorzugt 0 bis 10 Gew.-% mindestens eines üblichen Hilfs- und/oder Zusatzstoffes,
besteht, wobei die Summe der Gewichtsanteile der Komponenten (F) bis (H) jeweils 100 Gew.-% beträgt, und die Komponente (III) aus
(J) 40 bis 90 Gew.-%, bevorzugt 50 bis 85 Gew.-% Wasser,
(K) 5 bis 50 Gew.-%, bevorzugt 10 bis 45 Gew.-% einer oder mehrerer Komponenten (A1) und/oder (A2) und/oder (A3) und/oder (A4) des Bindemittels (A) in Wasser-dispergierter Form,
(L) 0 bis 20 Gew.-, bevorzugt 2 bis 10 Gew.-%, mindestens eines Neutralisationsmittels und
(M) 0 bis 20 Gew.-%, bevorzugt 2 bis 10 Gew.-%, mindestens eines üblichen Hilfs- und/oder Zusatzstoffes,
besteht, wobei die Summe der Gewichtsanteile der Komponenten (J) bis (M) jeweils 100 Gew.-% beträgt.

9. Beschichtungsmittel nach einem der Ansprüche 1 bis 8, dadurch gekennzeichnet, die Komponenten (I), (II) und (III) in solchen Mengen enthalten sind, daß das Äquivalentverhältnis von Hydroxylgruppen der Komponenten (A1) und/oder (A2) und/oder (A3) und/oder (A4) des Bindemittels (A) zu den vernetzenden Gruppen des Vernetzungsmittels (F) zwischen 1 : 2 und 2 : 1, bevorzugt zwischen 1 : 1,2 und 1 : 1,5 , liegt.

10. Verfahren zur Herstellung der Beschichtungsmittel nach einem der Ansprüche 1 bis 9, dadurch gekennzeichnet, daß zunächst eine Lösung des Bindemittels (A) in dem organischen, gegebenenfalls wasserverdünnbaren Lösemittel hergestellt wird, die weiteren Bestandteile der Komponente (I) in dieser Bindemittellösung dispergiert werden und die so erhaltene Komponente (I) dann mit den Komponenten (II) und gegebenenfalls (IV) gemischt und anschließend die erhaltene Mischung zu der Komponente (III) zugegeben wird.

11. Verfahren zur Herstellung der Beschichtungsmittel nach einem der Ansprüche 1 bis 9, dadurch gekennzeichnet, daß zunächst eine Lösung des Bindemittels (A) in dem organischen, gegebenenfalls wasserverdünnbaren Lösemittel hergestellt wird, die weiteren Bestandteile der Komponente (I) in dieser Bindemittellösung dispergiert werden und die so erhaltene Komponente (I) dann mit den Komponenten (II) und gegebenenfalls (IV) gemischt werden und anschließend zu der resultierenden Mischung die Komponente (III) gegeben wird.

12. Verwendung der Beschichtungsmittel nach einem der Ansprüche 1 bis 9 in der Reparaturlackierung, insbesondere in der Autoreparaturlackierung.

13. Verwendung der Beschichtungsmittel nach einem der Ansprüche 1 bis 9 zur Beschichtung von Kunststoffen.

14. Verwendung der Beschichtungsmittel nach einem der Ansprüche 1 bis 9 als Decklack und/oder Füller.

## Claims

1. Coating composition comprising at least three components, based on a polymer which contains hydroxyl groups and acid groups which can be converted into the corresponding acid anion groups and is dissolved or dispersed in one or more organic solvents, and on an isocyanate-group-containing crosslinking agent, characterized in that
1.) component (I) contains as binder (A)
(A1) at least one acrylate copolymer (A1) which is dissolved or dispersed in one or more organic, optionally water-dilutable solvents and contains hydroxyl groups and acid groups, which can be converted into the corresponding acid anion groups, having a number-average molecular weight Mn of between 1000 and 30,000 daltons, an OH number of from 40 to 200 mg of KOH/g and an acid number of from 5 to 150 mg of KOH/g, and/or
(A2) at least one polyester resin (A2) which is dissolved or dispersed in one or more organic, optionally water-dilutable solvents and contains hydroxyl groups and acid groups, which can be converted into the corresponding acid anion groups, having a number-average molecular weight Mn of between 1000 and 30,000 daltons, an OH number of from 30 to 250 mg of KOH/g and an acid number of from 5 to 150 mg of KOH/g, and/or
(A3) at least one polyurethane resin (A3) which is dissolved or dispersed in one or more organic, optionally water-dilutable solvents and contains hydroxyl groups and acid groups, which can be converted into the corresponding acid anion groups, having a number-average molecular weight Mn of between 1000 and 30,000 daltons, an OH number of from 20 to 200 mg of KOH/g and an acid number of from 5 to 150 mg of KOH/g, and
(A4) if desired, at least one water-dilutable binder from the group of the acrylicized polyurethane resins and/or polyesteracrylates which is compatible with the other constituents of component (I),
the binder components (A1), (A2), (A3) and, optionally, (A4) being selected such that a 50% strength solution of the binder (A) in ethoxyethyl propionate has a viscosity of <= 6.0 dPa.s at 23°C,
2.) component (II) comprises as crosslinking agent (F) at least one di- and/or polyisocyanate (F1) which is optionally dissolved or dispersed in one or more organic solvents, and, optionally, at least one further crosslinking agent consisting of at least one epoxide compound (F2) having at least two epoxide groups per molecule and/or at least one amino resin (F3), and
3.) component (III) comprises components (A1) and/or (A2) and/or (A3) and/or (A4) in aqueous dispersion.

2. Coating composition according to Claim 1, characterized in that
1.) as component (A1), acrylate copolymers are employed which, as a 50% strength solution in ethoxyethyl propionate, have a viscosity of <= 6.0 dPa.s at 23 degrees C, and/or
2.) as component (A2), polyester resins are employed which, as a 50% strength solution in ethoxyethyl propionate, have a viscosity of <= 6.0 dPa.s at 23 degrees C, and/or
3.) as component (A3), polyurethane resins are employed which, as a 50% strength solution in ethoxyethyl propionate, have a viscosity of <= 6.0 dPa.s at 23 degrees C, and/or
4.) in that the binders (A1) and/or (A2) and/or (A3) and/or (A4) are selected such that a 50% strength solution of the binder (A) in ethoxyethyl propionate has a viscosity of ≤ 6.0 dPa.s at 23 degrees C.

3. Coating composition according to Claim 1 or 2, characterized in that component (I) comprises as binder (A) at least 20% by weight of (A1), from 0 to 30% by weight of (A2), from 0 to 80% by weight of (A3) and from 0 to 10% by weight of (A4), the sum of the proportions by weight of components (A1) to (A4) being in each case 100% by weight, based on the binder (A).

4. Coating composition according to one of Claims 1 to 3, characterized in that (A1) is obtainable by polymerizing, in an organic solvent or a solvent mixture, and in the presence of at least one polymerization initiator,
a1) an acid-group-free (meth)acrylic ester which is different from (a2), (a3), (a4), (a5) and (a6) and is copolymerizable with (a2), (a3), (a4), (a5) and (a6), or a mixture of such monomers,
a2) an ethylenically unsaturated monomer which carries at least one hydroxyl group per molecule and is free from acid groups, which is copolymerizable with (a1), (a3), (a4), (a5) and (a6) and is different from (a5), or a mixture of such monomers,
a3) an ethylenically unsaturated monomer which carries at least one acid group which can be converted into the corresponding acid anion group per molecule and is copolymerizable with (a1), (a2), (a4), (a5) and (a6), or a mixture of such monomers, and
(a4) if desired, one or more vinyl esters of α-branched monocarboxylic acids having 5 to 18 carbon atoms per molecule,
a5) if desired, at least one reaction product of acrylic acid and/or methacrylic acid with the glycidyl ester of an α-branched monocarboxylic acid having 5 to 18 carbon atoms per molecule or, instead of the reaction product, an equivalent quantity of acrylic and/or methacrylic acid, which is then reacted, during or after the polymerization reaction, with the glycidyl ester of an α-branched monocarboxylic acid having 5 to 18 carbon atoms per molecule, and
a6) if desired, an acid-group-free, ethylenically unsaturated monomer which is copolymerizable with (a1), (a2), (a3), (a4) and (a6) and is different from (a1), (a2), (a4) and (a5), or a mixture of such monomers,
(a1), (a2), (a3), (a4), (a5) and (a6) being selected in nature and quantity such that the polyacrylate resin (A1) has the desired OH number, acid number and the desired molecular weight.

5. Coating composition according to one of Claims 1 to 4, characterized in that the polyester resin (A2) is obtainable by reacting
p1) polycarboxylic acids or esterifiable derivatives thereof, together if desired with monocarboxylic acids,
p2) polyols, together if desired with monools,
p3) if desired, further modifying components, and
p4) if desired, a component which is reactive with the reaction product of (p1), (p2) and, if used, (p3).

6. Coating composition according to one of Claims 1 to 5, characterized in that the polyurethane resin (A3) is obtainable by employing an alcohol component which consists, at least in a certain proportion, of
a₁) at least one diol of the formula (I') 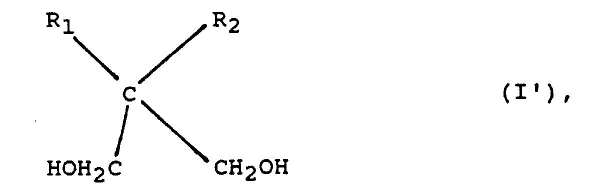 in which R₁ and R₂ are each an identical or different radical and are an alkyl radical of 1 to 18 carbon atoms, an aryl radical or a cycloaliphatic radical, with the proviso that R₁ and/or R₂ may not be methyl, and/or
a₂) at least one diol of the formula (II') 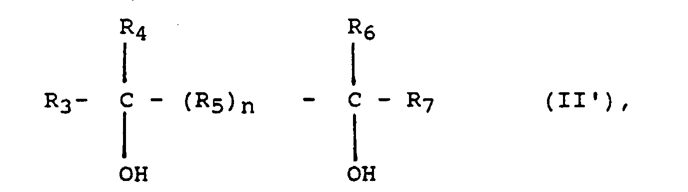 in which R₃, R₄, R₆ and R₇ are each identical or different radicals and are an alkyl radical of 1 to 6 carbon atoms, a cycloalkyl radical or an aryl radical, and R₅ is an alkyl radical of 1 to 6 carbon atoms, an aryl radical or an unsaturated alkyl radical of 1 to 6 carbon atoms, and n is either 0 or 1,
and/or by employing diisocyanates of the general formula (III'): 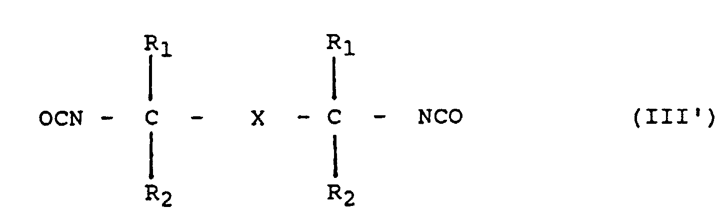 in which X is a divalent, aromatic hydrocarbon radical, preferably an optionally halogen, methyl- or methoxy-substituted naphthylene, diphenylene or 1,2-, 1,3- or 1,4-phenylene radical, particularly preferably a 1,3-phenylene radical, and R₁ and R₂ are an alkyl radical of 1 to 4 carbon atoms, preferably a methyl radical,
and/or by employing diisocyanates of the general formula (IV'): 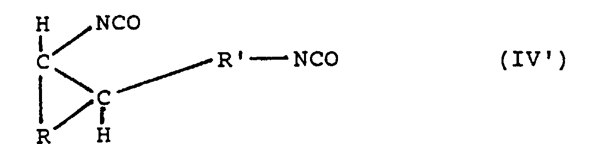 where:
R is a divalent alkyl or aralkyl radical of 3 to 20 carbon atoms and
R' is a divalent alkyl or aralkyl radical of 1 to 20 carbon atoms.

7. Coating composition according to one of Claims 1 to 6, characterized in that component (II) comprises, as crosslinking agent,
(F1) at least 70% by weight, preferably from 80 to 100% by weight, of a non-blocked di- and/or polyisocyanate (F1) and/or of a mixture of blocked and non-blocked di- and/or polyisocyanate,
(F2) from 0 to 30% by weight, preferably from 2 to 20% by weight, of at least one epoxide compound (F2) having at least 2 epoxide groups per molecule, and
(F3) from 0 to 30% by weight, preferably from 2 to 20% by weight, of at least one amino resin (F3),
based in each case on the overall weight of the crosslinking agent (F).

8. Coating composition according to one of Claims 1 to 7, characterized in that component (I) consists of
(A) from 20 to 90% by weight, preferably from 35 to 80% by weight, of the binder (A),
(B) from 0 to 60% by weight, preferably from 5 to 50% by weight, of at least one pigment and/or filler,
(C) from 5 to 50% by weight, preferably from 10 to 40% by weight, of at least one organic, optionally water-dilutable solvent, and
(D) from 0 to 20% by weight, preferably from 2 to 10% by weight, of at least one neutralizing agent
(E) from 0 to 20% by weight, preferably from 2 to 10% by weight, of at least one customary auxiliary and/or additive,
the sum of the proportions by weight of components (A) to (E) being in each case 100% by weight, and component (II) consists of
(F) from 50 to 100% by weight, preferably from 60 to 90% by weight, of at least one crosslinking agent (F),
(G) from 0 to 50% by weight, preferably from 10 to 40% by weight, of at least one organic, optionally water-dilutable solvent, and
(H) from 0 to 20% by weight, preferably from 0 to 10% by weight, of at least one customary auxiliary and/or additive,
the sum of the proportions by weight of components (F) to (H) being in each case 100% by weight, and component (III) consists of
(J) from 40 to 90% by weight, preferably from 50 to 85% by weight, of water,
(K) from 5 to 50% by weight, preferably from 10 to 45% by weight, of components (A1) and/or (A2) and/or (A3) and/or (A4) of the binder (A) in water-dispersed form,
(L) from 0 to 20% by weight, preferably from 2 to 10% by weight, of at least one neutralizing agent, and
(M) from 0 to 20% by weight, preferably from 2 to 10% by weight, of at least one customary auxiliary and/or additive,
the sum of the proportions by weight of components (J) to (M) being in each case 100% by weight.

9. Coating composition according to one of Claims 1 to 8, characterized in that components (I), (II) and (III) are present in quantities such that the ratio of equivalents of hydroxyl groups of components (A1) and/or (A2) and/or (A3) and/or (A4) of the binder (A) to the crosslinking groups of the crosslinking agent (F) is between 1:2 and 2:1, preferably between 1:1.2 and 1:1.5.

10. Process for the preparation of the coating compositions according to one of Claims 1 to 9, characterized in that first of all a solution of the binder (A) is prepared in the organic, optionally water-dilutable solvent, the further constituents of component (I) are dispersed in this binder solution, and the resulting component (I) is then mixed with the components (II) and, if desired, (IV), and subsequently the mixture obtained is added to component (III).

11. Process for the preparation of the coating compositions according to one of Claims 1 to 9, characterized in that first of all a solution of the binder (A) is prepared in the organic, optionally water-dilutable solvent, the further constituents of component (I) are dispersed in this binder solution, and the resulting component (I) is then mixed with components (II) and, if desired (IV), and subsequently component (III) is added to the resulting mixture.

12. Use of the coating compositions according to one of Claims 1 to 9 in repair coating, especially in automotive refinishing.

13. Use of the coating compositions according to one of Claims 1 to 9 for the coating of plastics.

14. Use of the coating compositions according to one of Claims 1 to 9 as topcoat and/or filler.

## Revendications

1. Composition de revêtement comprenant au moins trois composants, à base d'un polymère renfermant des groupes hydroxy et des groupes acides, qui peuvent être transformés en groupes acides anioniques correspondants et dissout ou dispersé dans un ou plusieurs solvants organiques, et d'un agent de réticulation renfermant des groupes isocyanate, caractérisée en ce que
1.) le composant (I) contient en tant que liant (A)
(A1) au moins un copolymère d'acrylate (A1) renfermant des groupes hydroxy et des groupes acides, qui peuvent être transformés en groupes acides anioniques correspondants, et dissout ou dispersé dans un ou plusieurs solvants organiques éventuellement diluables à l'eau, ayant un poids moléculaire moyen en nombre Mn compris entre 1 000 et 30 000 daltons, un indice OH de 40 à 200 mg KOH/g et un indice d'acide de 5 à 150 mg KOH/g et/ou
(A2) au moins une résine de polyester (A2) renfermant des groupes hydroxy et des groupes acides, qui peuvent être transformés en groupes acides anioniques correspondants, et dissoute ou dispersée dans un ou plusieurs solvants organiques éventuellement diluables à l'eau, ayant un poids moléculaire moyen en nombre Mn compris entre 1 000 et 30 000 daltons, un indice OH de 30 à 250 mg KOH/g et un indice d'acide de 5 à 150 mg KOH/g et/ou
(A3) au moins une résine de polyuréthanne (A3) renfermant des groupes hydroxy et des groupes acides, qui peuvent être transformés en groupes acides anioniques correspondants, et dissoute ou dispersée dans un ou plusieurs solvants organiques éventuellement diluables à l'eau, ayant un poids moléculaire moyen en nombre Mn compris entre 1 000 et 30 000 daltons, un indice OH de 20 à 200 mg KOH/g et un indice d'acide de 5 à 150 mg KOH/g et
(A4) éventuellement au moins un liant diluable à l'eau, compatible avec les autres constituants du composant (I), choisi parmi le groupe des resines de polyuréthanne acrylées et/ou des polyester-acrylates,
les liants (A1), (A2), (A3) et éventuellement (A4) étant choisis de telle sorte qu'une solution à 50% du liant (A) dans du propionate d'éthoxyéthyle présente, à 23°C, une viscosité ≤ 6,0 dPa.s,
2.) le composant (II) contient, en tant qu'agent de réticulation (F), au moins un di- et/ou polyisocyanate (F1), dissout ou dispersé dans un ou plusieurs solvants organiques, et éventuellement au moins un agent de réticulation supplémentaire, comprenant au moins un composé époxyde (F2) ayant au moins deux groupes époxy par molécule et/ou au moins une résine aminoplaste (F3), et
3.) le composant (III) contient les composants (A1) et/ou (A2) et/ou (A3) et/ou (A4) en dispersion aqueuse.

2. Composition de revêtement selon la revendication 1, caractérisée en ce que
1.) on utilise, en tant que composant (A1), des copolymères d'acrylate qui présentent, en tant que solution à 50% dans du propionate d'éthoxyéthyle à 23°C, une viscosité ≤ 6,0 dPa.s, et/ou
2.) on utilise, en tant que composant (A2), des résines de polyester qui présentent, en tant que solution à 50% dans du propionate d'éthoxyéthyle à 23°C, une viscosité ≤ 6,0 dPa.s, et/ou
3.) on utilise, en tant que composant (A3), des résines de polyuréthanne qui présentent, en tant que solution à 50% dans du propionate d'éthoxyéthyle à 23°C, une viscosité ≤ 6,0 dPa.s, et/ou
4.) en ce que les liants (A1) et/ou (A2) et/ou (A3) et/ou (A4) sont choisis de telle sorte qu'une solution à 50% du liant (A) dans du propionate d'éthoxyéthyle présente, à 23°C, une viscosité ≤ 6,0 dPa.s.

3. Composition de revêtement selon la revendication 1 ou 2, caractérisée en ce que le composant (I) contient en tant que liant (A), au moins 20% en poids de (A1), de 0 à 30% en poids de (A2), de 0 à 80% en poids de (A3) et de 0 à 10% en poids de (A4), la somme des proportions pondérales des composants (A1) à (A4) étant, dans chaque cas, de 100% en poids, par rapport au liant (A).

4. Composition de revêtement selon l'une quelconque des revendications 1 à 3, caractérisée en ce que (A1) peut être obtenu en polymérisant, dans un solvant ou un mélange de solvants organiques, et en présence d'au moins un amorceur de polymérisation,
a1) un ester (méth)acrylique dépourvu de groupe acide, différent de (a2), (a3), (a4), (a5) et (a6) et copolymérisable avec (a2), (a3), (a4), (a5) et (a6), ou un mélange de tels monomères,
a2) un monomère éthyléniquement insaturé copolymérisable avec (a1), (a2), (a3), (a4), (a5) et (a6), différent de (a5), qui renferme au moins un groupe hydroxy par molécule et qui est dépourvu de groupe acide, ou un mélange de tels monomères,
a3) un monomère éthyléniquement insaturé renfermant au moins un groupe acide par molécule et copolymérisable avec (a1), (a2), (a4), (a5) et (a6), ou un mélange de tels monomères et
a4) éventuellement un ou plusieurs esters vinyliques d'acides monocarboxyliques ramifiés en position α, ayant de 5 à 18 atomes de carbone par molécule,
a5) éventuellement au moins un produit de réaction de l'acide acrylique et/ou de l'acide méthacrylique avec l'ester glycidylique d'un acide monocarboxylique ramifié en position α, ayant de 5 à 18 atomes de carbone par molécule, ou à la place du produit de réaction, une quantité équivalente d'acide acrylique et/ou méthacrylique, qui est alors mise à réagir, pendant ou après la réaction de polymérisation, avec l'ester glycidylique d'un acide monocarboxylique ramifié en position α, ayant de 5 à 18 atomes de carbone par molécule,
a6) éventuellement un monomère éthyléniquement insaturé dépourvu de groupe acide, copolymérisable avec (a1), (a2), (a3), (a4) et (a5) et différent de (a1), (a2), (a4) et (a5), ou un mélange de tels monomères,
(a1), (a2), (a3), (a4), (a5) et (a6) étant choisis, en ce qui concerne la nature et la quantité, de telle sorte que la résine de polyacrylate (A1) présente l'indice OH et l'indice d'acide souhaités et le poids moléculaire souhaité.

5. Composition de revêtement selon l'une quelconque des revendications 1 à 4, caractérisée en ce que la résine de polyester (A2) peut être obtenue par réaction de
p1) des acides polycarboxyliques ou leurs dérivés susceptibles d'être estérifiés, éventuellement conjointement avec des acides monocarboxyliques,
p2) des polyols, éventuellement avec des mono-ols,
p3) éventuellement d'autres composants modifiants et
p4) éventuellement un composant réactif vis-à-vis du produit de réaction (p1), (p2) et éventuellement (p3).

6. Composition de revêtement selon l'une quelconque des revendications 1 à 5, caractérisée en ce que la résine de polyuréthanne (A3) peut être obtenue en utilisant un composant alcool qui comprend, au moins en une certaine proportion,
a1) au moins un diol de formule (I') 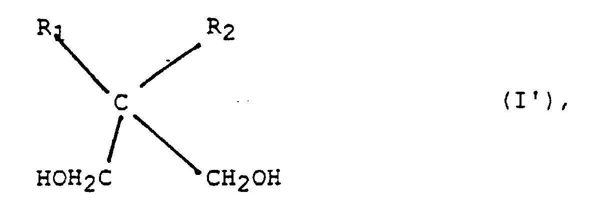 dans laquelle R₁ et R₂ représentent chacun un radical identique ou différent et désignent un radical alkyle ayant de 1 à 18 atomes de carbone, un radical aryle ou un radical cycloaliphatique, à condition que R₁ et/ou R₂ ne puissent pas être un méthyle, et/ou
a2) au moins un diol de formule (II') 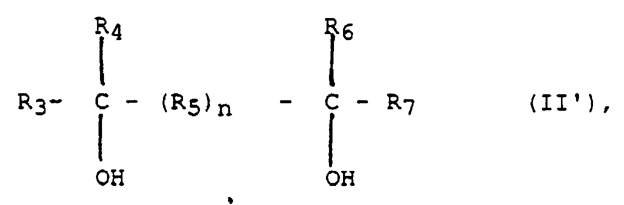 dans laquelle R₃, R₄, R₆ et R₇ représentent chacun un radical identique ou différent et désignent un radical alkyle ayant de 1 à 6 atomes de carbone, un radical cycloalkyle ou un radical aryle, et R₅ représente un radical alkyle ayant de 1 à 6 atomes de carbone, un radical aryle ou un radical alkyle insaturé ayant de 1 à 6 atomes de carbone et n vaut soit 0 soit 1,
et/ou en utilisant des diisocyanates de formule générale (III') : 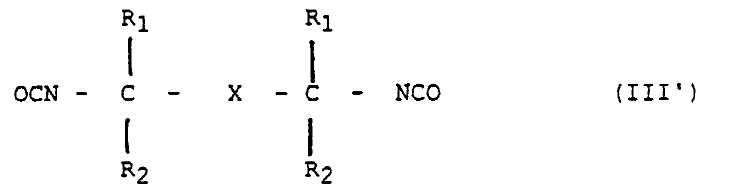 dans laquelle X désigne un radical hydrocarboné aromatique bivalent, de préférence un radical naphtylène, diphénylène ou 1,2-, 1,3- ou 1,4-phénylène, éventuellement halogéno-, méthyl- ou méthoxy-substitué, particulièrement préférablement un radical 1,3-phénylène, et R₁ et R₂ désignent un radical alkyle ayant de 1 à 4 atomes de carbone, de préférence un radical méthyle,
et/ou en utilisant des diisocyanates de formule générale (IV') : 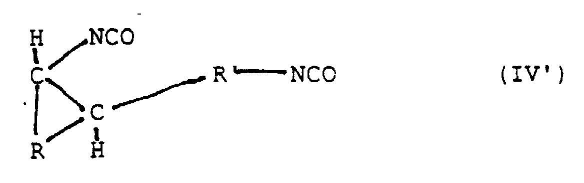 avec :
R étant un radical alkyle ou aralkyle bivalent ayant de 3 à 20 atomes de carbone, et
R' étant un radical alkyle ou aralkyle bivalent ayant de 1 à 20 atomes de carbone.

7. Composition de revêtement selon l'une quelconque des revendications 1 à 6, caractérisée en ce que le composant (II) contient en tant qu'agent de réticulation,
(F1) au moins 70% en poids, de préférence de 80 à 100% en poids d'un di- et/ou polyisocyanate non bloqué (F1) et/ou d'un mélange de di- et/ou polyisocyanate bloqué et non bloqué,
(F2) de 0 à 30% en poids, de préférence de 2 à 20% en poids, d'au moins un composé époxyde (F2) ayant au moins deux groupes époxy par molécule, et
(F3) de 0 à 30% en poids, de préférence de 2 à 20% en poids, d'au moins une résine aminoplaste (F3),
dans chaque cas par rapport au poids total de l'agent de réticulation (F).

8. Composition de revêtement selon l'une quelconque des revendications 1 à 7, caractérisée en ce que le composant (I) comprend
(A) de 20 à 90% en poids, de préférence de 35 à 80% en poids, du liant (A),
(B) de 0 à 60% en poids, de préférence de 5 à 50% en poids, d'au moins un pigment et/ou une charge,
(C) de 5 à 50% en poids, de préférence de 10 à 40% en poids, d'au moins un solvant organique éventuellement diluable à l'eau et
(D) de 0 à 20% en poids, de préférence de 2 à 10% en poids, d'au moins un agent neutralisant
(E) de 0 à 20% en poids, de préférence de 2 à 10% en poids, d'au moins un auxiliaire et/ou additif habituel,
la somme des proportions pondérales des composants (A) à (E) étant dans chaque cas de 100% en poids, et le composant (II) comprend
(F) de 50 à 100% en poids, de préférence de 60 à 90% en poids, d'au moins un agent de réticulation (F),
(G) de 0 à 50% en poids, de préférence de 10 à 40% en poids, d'au moins un solvant organique éventuellement diluable à l'eau et
(H) de 0 à 20% en poids, de préférence de 0 à 10% en poids d'au moins un auxiliaire et/ou additif habituel,
la somme des proportions pondérales des composants (F) à (H) étant dans chaque cas de 100% en poids, et le composant (III) comprend
(J) de 40 à 90% en poids, de préférence de 50 à 85% en poids d'eau,
(K) de 5 à 50% en poids, de préférence de 10 à 45% en poids d'un ou de plusieurs composants (A1) et/ou (A2) et/ou (A3) et/ou (A4) du liant (A) sous forme dispersée dans l'eau,
(L) de 0 à 20% en poids, de préférence de 2 à 10% en poids, d'au moins un agent neutralisant et
(M) de 0 à 20% en poids, de préférence de 2 à 10% en poids, d'au moins un auxiliaire et/ou additif habituel,
la somme des proportions pondérales des composants (J) à (M) étant, dans chaque cas, de 100% en poids.

9. Composition de revêtement selon l'une quelconque des revendications 1 à 8 caractérisée en ce que les composants (I), (II) et (III) sont présents en quantités telles que le rapport d'équivalents entre les groupes hydroxy des composants (A1) et/ou (A2) et/ou (A3) et/ou (A4) du liant (A) et les groupes réticulants de l'agent de réticulation (F) est compris entre 1:2 et 2:1, de préférence entre 1:1,2 et 1:1,5.

10. Procédé de préparation des compositions de revêtements selon l'une quelconque des revendications 1 à 9, caractérisé en ce que l'on prépare d'abord une solution du liant (A) dans le solvant organique éventuellement diluable à l'eau, on disperse les autres constituants du composant (I) dans cette solution de liant et on mélange alors le composant (I) ainsi obtenu avec les composants (II) et éventuellement (IV), et on ajoute ensuite le mélange obtenu au composant (III).

11. Procédé de préparation des compositions de revêtements selon l'une quelconque des revendications 1 à 9, caractérisé en ce que l'on prépare d'abord une solution du liant (A) dans le solvant organique éventuellement diluable à l'eau, on disperse les autres constituants du composant (I) dans cette solution de liant et on mélange alors le composant (I) ainsi obtenu avec les composants (II) et éventuellement (IV), et on ajoute ensuite le composant (III) au mélange résultant.

12. Utilisation des compositions de revêtements selon l'une quelconque des revendications 1 à 9 pour des retouches, en particulier pour des retouches d'automobiles.

13. Utilisation des compositions de revêtements selon l'une quelconque des revendications 1 à 9 pour le revêtement de matières plastiques.

14. Utilisation des compositions de revêtements selon l'une quelconque des revendications 1 à 9 en tant que couche de finition et/ou charge.
